# EUROPEAN PATENT APPLICATION

(11) **EP 4 769 188 A1**
(43) Date of publication of application: **01.07.2026**
(21) Application number: 25158145.0
(22) Date of filing: 14.02.2025
(51) Int. Cl.: G06F 21/33, H04L 9/08, H04L 9/00, H04L 9/40, H04J 3/00

(54) **AUTHORISATION**

(30) Priority: 31.12.2024 GB 202419173; 31.12.2024 GB 202419175; 31.12.2024 GB 202419174; 31.12.2024 GB 202419176
(71) Applicant: Financial & Risk Organisation Limited, London, E14 5AQ (GB)
(72) Inventor: WOODCOCK, Stephen, London EC4M 7LS (GB)
(74) Representative: Mathys & Squire

(57) **Abstract**

The present disclosure relates to methods of, and systems for, authorisation. Aspects of the present disclosure relate to methods of, and systems for: token key management, set-based authorisation and synchronising an authorisation system.

## Description

### Field of Invention

This invention relates to method of, and systems and apparatuses for, authorisation. More specifically, the invention relates to token key management, set-based authorisation and synchronising an authorisation system.

### Background

Token-based authorisation is the process of authorising clients to access resources on a server by checking a token to verify the identity of a client and check the resources the client is allowed to access. Token-based authorisation over the internet often involves the use of JSON Web Tokens (JWTs), which include as their payload JavaScript Object Notation (JSON) data relating to claims about a client (such as claims relating to the identity of the client, or the permissions granted to the client).

JWTs are encoded using cryptographic algorithms, for example public-key (also known as asymmetric) cryptographic algorithms. Public-key cryptography uses pairs of cryptographic keys, each pair consisting of a public key (which can be publicly distributed, without compromising security) and a corresponding private key (which is known only to one party, typically the issuer of the token). For example, a JWT may be issued and signed by a sender using the recipient's private key, and the JWT can be verified only by the recipient using their corresponding public key. Token verification in JWT-based systems using public-key cryptography is generally based on the provision of one or more JSON Web Key Set (JWKS) endpoints (typically, read-only HTTP servers) which publish the public keys needed to verify the signatures of JWTs.

For reasons of key space exhaustion and limitations on key re-use, the public keys available on the endpoint (and their private key counterparts) are normally rotated or changed at a periodic frequency.

It has now been appreciated pursuant to the present invention that, for large or geographically distributed systems, where keys must be published on multiple endpoint servers in different geographical regions or in different physical data centres, this key rotation can cause problems. First, a client or server can receive a token signed with a private key which has only just been rotated in or out of use, meaning that the token cannot be verified by the recipient. Second, as the JWKS public key information is typically distributed on multiple endpoint servers for availability reasons, one or more of these endpoint servers may have an out of date set of keys for a time period, even though the public keys available on other endpoint servers have changed, meaning that different public keys may be obtained from different endpoint servers at the same time.

Another problem that has been appreciated pursuant to the present invention is that modern applications often require multiple tokens to control different aspects of behaviour or have different scope and security restrictions at different endpoints, requiring different access tokens. As each access token will only be valid for a period of time, after which it must be refreshed using a refresh token, applications requiring a set of multiple access tokens also require a corresponding set of multiple refresh tokens to be generated and exchanged at every refresh period. The resulting increased number of network calls for refresh tokens can produce a large load on the token server, and also use up valuable network bandwidth thereby increasing latency in servicing such calls. There is also more difficulty in handling multiple possibility around errors and how to reconcile multiple requests states if only one failed.

For large or geographically distributed systems of clients and servers, as has been appreciated pursuant to the present invention further problems arise in relation to synchronisation across the system.

First, client computers' clocks may drift significantly from the clock of the server with which the client is exchanging tokens, even if clock synchronisation services such as the network time protocol (NTP) are available. As JWT access tokens are often valid only for short time periods, and must be refreshed while they remain valid, such clock drift can lead to clients submitting invalid tokens to a server, or discarding valid tokens, because time calculations differ between the server and client.

Secondly, token information is ideally maintained in cache memories of the servers to reduce database calls. However, the cache must be distributed on multiple servers across the system to maintain maximum geographic availability. In addition, in geographically distributed systems, a client can be issued tokens in any geographical region, which means the token information must be updated in, and replicated to, any region, and it must be possible to validate the token in any region to ensure full geographic availability. This can create difficulties in ensuring cache consistency between servers in different regions.

The present disclosure seeks to ameliorate these problems that have been appreciated pursuant to the present invention.

### Summary of the Invention

Aspects and embodiments of the present invention are set out in the appended claims. These and other aspects and embodiments of the invention are also described herein.

### Key rotation

According to at least one aspect of the present disclosure, there is provided a token key management method, comprising: maintaining a key set including a plurality of subsets of one or more keys corresponding to a plurality of respective temporally contiguous token signing periods including a current token signing period and a past and/or future token signing period.

By maintaining a key set including a plurality of subsets of one or more keys corresponding to a plurality of respective temporally contiguous token signing periods including a current token signing period and a past and/or future token signing period, the advantage of an improved token key management method which may be more resilient to server synchronisation and timing issues associated with key rotation may be afforded, which in turn can simplify the coordination requirements for global roll out and geographic distribution of key sets e.g. in a distributed access/authentication system whereby key sets need to be available and rotated in multiple different geographical regions or in different physical datacentres.

For the same reasons, maintaining the key set may comprise periodically updating the key set, e.g. during/at each token signing period. Periodically updating the key set may comprise performing a key set rotation operation, whereby the keys of the most temporally advanced subset of the plurality of subsets are replaced with one or more new keys, and the keys of each other subset are replaced with the keys of the respective temporally proceeding subset of the plurality of subsets.

For the same reasons, the key set is preferably periodically updated in response to receiving a key event notification indicating the presence of one or more new keys. This may further improve the coordination requirements for global roll out and geographic distribution of key sets.

For the same reasons, the key set preferably includes (three) subsets of one or more keys corresponding to a plurality of respective temporally contiguous token signing periods including a current token signing period, a past token signing period, and a future token signing period. In particular, this may allow for tokens signed in the last token signing period, which may still be active, to be verified using the key set of the current token signing period, and provide forward visibility of keys used for the next token signing period.

The key set may include: a first key subset comprising key pairs associated with a last token signing period; a second key subset comprising key pairs associated with a current token signing period; and a third key subset comprising key pairs associated with a next token signing period. In this case, periodically updating the key set (at/for each token signing period) may comprise a key set rotation operation, whereby: the keys of the first subset are replaced (e.g. removed from use) with the keys of the second subset; the keys of the second subset are replaced with the keys of the third subset; and the keys of the third subset are replaced with one or more new keys.

For the same reasons, preferably, periodically updating the key set comprises: retrieving an updated key set comprising the one or more new keys, preferably in response to receiving a key event notification indicating the presence of the one or more new keys; and replacing the key set with the updated key set. In particular, replacing the key set with an updated key set may further assist in coordination of global roll out and geographic distribution, by helping to ensure only one key set is in use, e.g. at the one or more token servers.

For the same reasons, preferably, the updated key set is retrieved from a key database, and wherein the key event notification is generated in response to the one or more new keys being stored in the key database. In particular, the first database may provide a single secure repository holding the updated key set which may further assist in coordination of global roll out and geographic distribution.

The key database may store subsets of keys corresponding to multiple consecutive token signing periods including the current token signing period and past token signing periods. Each token signing period, the one or more new keys may be stored at/added to the key database.

For the same reasons, preferably, the updated key set is retrieved from a key database based on a time stamp associated with each respective subset of keys of the updated key set stored in the key database; preferably by identifying the most recent plurality of subsets of keys stored in the key database based on their associated time stamps. In particular, this may provide a robust means of retrieving the most recent and up to date key set available for use.

One or more new keys may be stored in a key database in association with an identifier. The identifier may be further stored in a further database in association with a time stamp. In this case, maintaining the key set may comprise periodically updating the key set, preferably in response to receiving a key event notification, by replacing the key set with an updated the key set including the one or more new keys, and wherein the updated key set is retrieved from the key database using the most recent plurality of identifiers determined from the further database based on their associated time stamps.

By storing the identifier in association with a time stamp in the further database, a sorted order can be applied to the keys and the further database can thus provide a single point of reference for identifying which keys should be available and in use for each token signing period. This may further assist in coordination of global roll out and geographic distribution of key sets in a distributed access/authentication system.

The key event notification may be generated in response to the further database being updated to store the identifier in association with the time stamp.

The further database may be updated to store the identifier in association with the time stamp responsive to confirmation of the one or more new keys being stored in the key database.

Each key of each subset of the key set may comprise a key pair, including a private part used for signing a token and a corresponding public part used for verifying the signed token. In this case, the method may further comprise: signing a token with a private part of a given key pair of the subset corresponding to current token signing period; and providing the public part of the key pairs of the key set to a validating entity.

The key set may be maintained at one or more token servers. Maintaining the key set may comprise storing the key set at the one or more token servers. The key set stored at a token server may be referred to as a current key set. The key set may be stored in non-persistent memory, such as a memory cache.

Where the keys are key pairs, the one or more token servers may be configured to: use a private part of a key pair of the subset corresponding to current token signing period for signing tokens; and provide public parts of the key pairs of the key set to a verifying entity for use in verifying signed tokens.

The token may be issued by the token server. The validating entity may be a client, client device or a resource server in communication with the token server over a network. The token may be an access token for providing a client with access to data or a resource at the resource server. Alternatively, the token may be an identification token for authentication a user identity. A token may be issued and signed (e.g. by the token server) in response to receiving a further token. For example, an access token may be issued and signed by a token server in response to receiving an identification token from an authentication server.

For the same reasons, the one or more token servers may comprise a first token server in a first geographic location and a second token in a second geographic location different to the first geographic location.

Maintaining the key set may comprise periodically updating the key set at each token server. This may comprise retrieving, at each token server, an updated key set including one or more new keys from a key database in response to receiving a key event notification indicating the presence of the one or more new keys; and replacing the key set at the respective token server with the updated key set.

For the same reasons, the method may further comprise: monitoring the key set at each token server, and causing, if the key sets at the respective token servers do not match within a predefined time period following a key set update, each token server to: retrieve the updated key set from the key database again; and replace the previous key set with the retrieved updated key set. In particular, this provides a means of determining success of failure of the key rotation across different token servers/regions, a means of remedial action to attempt to synchronise the key sets in use at different servers/regions if convergence is not achieved in the predefined time period.

The monitoring may be based on key state information provided by each token server indicating a state of each of the subsets of keys of the updated key set at the respective token server. As such, the method may further comprise: sending, by each token server, a notification containing information indicating a state of each of the subsets of keys of the updated key set at the respective token server; and monitoring the key set at each token server via the key state information received from each token server. Optionally or preferably, where the keys are key pairs, the key state information for each key subset includes data representing the public part of the key pairs of the respective key subset.

Causing each token server to retrieve the updated key set from the key database again may comprise generating a further key event notification.

Where the one or more new keys are stored in the key database in association with an identifier, and the key event notification is generated in response to a further database being updated to store the identifier in association with a time stamp, the step of generating the further key event notification may comprise: updating the further database, preferably by updating a latest time stamp associated with a latest identifier; and generating the further key event notification in response to updating the further database. Updating the time stamp may comprise updating the time stamp to a current time. This may allow the further key event notification to be generated without changing the temporal order of the items stored in the further database.

For the same reasons, the key database is preferably a multi-region database system comprising replicated databases accessible in multiple different geographic regions, and the key event notification is preferably generated after confirmation of replication of the one or more new keys across the replicated databases of the key database. For example, the step of updating the further database by storing the identifier in association with the time stamp may occur after confirmation of replication of the one or more new key pairs across the replicated databases of the key database. In particular, this may provide a way to prevent key rotation/updates in cases where the updated key set is not available in the key database for retrieval in all of the multiple different geographic regions, thereby improving coordination and global roll out of key set rotation in a geographically distributed system.

Updating the key set, or performing the key rotation operation, may further comprise: generating the one or more new keys; storing the one or more new keys in the key database in association with an identifier; updating a further database by storing the identifier in association with a time stamp; generating the key event notification in response to updating the second database; and retrieving the updated key set from the key database in response to receiving the key event notification.

Where the key set include three subsets, retrieving the updated key set from the key database may comprise: identifying, in response to receiving the key event notification, a latest three identifiers in the further database according to their time stamps; and retrieving, from the key database, the key subsets of the updated key set based on the identifiers identified from the further database.

Preferably, the token signing period is between half a day and 5 days, preferably one day one day, or two days, or three days.

The method may be for authorising user access to a resource and/or authenticating a user, wherein, preferably access to the resource is authorised and/or a user is authenticated in dependence on a signed token being verified by a verifying entity, and/or in dependence on a token being signed and/or verified using a key from the key set.

According to a further aspect of the disclosure, there is provided a token-based method of authorising user access to a resource and/or authenticating a user, wherein token keys are managed according to the token key management method as aforesaid, and wherein preferably access to the resource is authorised and/or a user is authenticated in dependence on a signed token being verified by a verifying entity, and/or in dependence on a token being signed and/or verified using a key from the key set.

According to a further aspect of the disclosure, there is provided a token key management system configured to implement the token key management method of the previous aspect, which system comprises means for implementing any or all of the above-described method steps. The advantages of the method thus apply equally to the corresponding system. The system comprises: means (preferably in the form of one or more servers with one or more processing devices and associated memory) for maintaining a key set including a plurality of subsets of one or more keys corresponding to a plurality of respective temporally contiguous token signing periods including a current token signing period and a past and/or future token signing period.

The one or more servers with one or more processing devices and associated memory are preferably configured with instructions that, when executed by the one or more processing devices, cause the means to perform the method of the previous aspect.

Maintaining the key set may comprise periodically updating the key set, preferably in response to receiving a key event notification indicating the presence of one or more new keys.

Maintaining the key set may comprise periodically updating the key set by performing a key set rotation operation, whereby the keys of the most temporally advanced subset of the plurality of subsets are replaced with one or more new keys, and the keys of each other subset are replaced with the keys of the respective temporally proceeding subset of the plurality of subsets.

The system may comprise means for (e.g. one or more servers with one or more processing devices and associated memory for) periodically updating the key set by: retrieving an updated key set comprising the one or more new keys in response to receiving a key event notification indicating the presence of the one or more new keys; and replacing the key set with the updated key set.

The system may comprise means for (e.g. one or more servers with one or more processing devices and associated memory for) retrieving the updated key set from a key database, and wherein the key event notification is generated in response to the one or more new keys being stored in the key database. Optionally or preferably, the means includes the key database in communication with the one or more servers, the key database storing subsets of keys corresponding to multiple consecutive token signing periods including the current token signing period and past token signing periods.

The system may comprise means for (e.g. one or more servers with one or more processing devices and associated memory for) retrieving the updated key set from a key database based on a time stamp associated with each respective subset of keys of the updated key set stored in the key database; preferably by identifying the most recent plurality of subsets of keys stored in the key database based on their associated time stamps.

One or more new keys may be stored in a key database in association with an identifier. The identifier may further be stored in a further database in association with a time stamp. Maintaining the key set by the means may comprise periodically updating the key set, preferably in response to receiving a key event notification, by replacing the key set with an updated the key set including the one or more new keys, and wherein the updated key set is retrieved from the key database using the most recent plurality of identifiers determined from the further database based on their associated time stamps. Optionally or preferably, the means includes the key database and the further database in communication with the one or more servers.

The key set is preferably periodically updated in response to receiving a key event notification, and the key event notification may be generated in response to the further database being updated to store the identifier in association with the time stamp.

The further database may be updated to store the identifier in association with the time stamp responsive to confirmation of the one or more new keys being stored in the key database.

The one or more servers may include one or more token servers at which the key set is maintained. Optionally or preferably, the one or more keys of each subset of the key set comprise key pairs, and the one or more token servers are configured to: use a private part of a key pair of the subset corresponding to current token signing period for signing tokens; and provide public parts of the key pairs of the key set to a verifying entity for use in verifying signed tokens.

The one or more token servers may comprise a first token server in a first geographic location and a second token in a second geographic location different to the first geographic location.

Maintaining the key set may comprise periodically updating the key set at each token server by: retrieving, at each token server, an updated key set including one or more new keys from a key database in response to receiving a key event notification indicating the presence of the one or more new keys; and replacing the key set at the respective token server with the updated key set. Optionally or preferably, the means for maintaining the key set comprises the key database in communication with the one or more servers including the one or more token servers.

The system may comprise means for (e.g. one or more servers with one or more processing devices and associated memory for): monitoring the key set at each token server, and causing, if the key sets at the respective token servers do not match within a predefined time period following a key set update, each token server to: retrieve the updated key set from the key database again; and replace the previous key set with the retrieved updated key set.

Each token server may be configured to send a notification containing information indicating a state of each of the subsets of keys of the updated key set at the respective token server; and the system may comprise means for (e.g. one or more servers with one or more processing devices and associated memory for) monitoring the key set at each token server via the key state information provided by each token server. Optionally or preferably, the means for monitoring the key state information may comprise a further server or processing device for processing the key state information received from each token server.

Causing each token server to retrieve the updated key set from the key database again may comprise: generating a further key event notification.

Where the one or more new keys are stored in the key database in association with an identifier, and the key event notification is generated in response to a further database being updated to store the identifier in association with a time stamp, generating the further key event notification may comprise: updating the further database, preferably by updating a latest time stamp associated with a latest identifier; and generating the further key event notification in response to updating the further database.

The key database is preferably a multi-region database system comprising replicated databases accessible in multiple different geographic regions. In this case, the key event notification is preferably generated after confirmation of replication of the one or more new keys across the replicated databases of the key database. For example, the step of updating the further database by storing the identifier in association with the time stamp may occur after confirmation of replication of the one or more new key pairs across the replicated databases of the key database.

The key database may be a secure database for storing keys. The key database and, where present, the further database may be in communication with the one or more token servers, and/or any other servers of the system. The key database may store one or more new keys and their corresponding identifiers that are generated at each key rotation, thus storing the one or more new keys for the current key rotation and previous key pairs from previous key rotations. The further database may store the identifier and corresponding time stamp that is generated at each key rotation, thus storing the identifier and corresponding time stamp for the one or more new key pairs of the current key rotation and the identifiers and corresponding time stamps of keys from previous key rotations. The key database and the further database may be part of a database system. The key database and the further database may be multi-regional or globally accessible databases, whereby data uploaded to the respective database in one region is replicated so as to be accessible in one or more other geographic regions.

Where the one or more servers include one or more token servers at which the key set is maintained, the one or more token servers may be configured to store the key set, preferably in a non-persistent memory such as a memory cache.

The token signing period may be between half a day and 5 days, preferably one day, or two days, or three days.

The means for monitoring the key set may include: one or more token servers at which the key set is maintained; and a key database in communication with the one or more token servers, the key database storing subsets of one or more keys corresponding to multiple consecutive token signing periods including the current token signing period and past token signing periods. In this case, each token server is configured to: retrieve an updated key set including one or more new keys from the key database, preferably in response to receiving a key event notification indicating the presence of the one or more new keys; and replace the key set with the updated key set.

Optionally or preferably, the one or more keys of each subset of the key set comprise key pairs, the one or more token servers are further configured to: use a private part of a key pair of the subset corresponding to current token signing period for signing tokens; and provide public parts of the key pairs of the key set to a verifying/validating entity for use in verifying signed tokens.

The verifying/validating entity may be a client, client device or a resource server in communication with the one or more token servers over a network. The token may be an access token for providing a client with access to data or a resource at the resource server. The means for monitoring the key set may include the one or more token server, the client and/or the resource server.

Preferably, the system comprises means for (e.g. one or more servers with one or more processing devices and associated memory for) generating the one or more new key; storing the new key in the key database in association with an identifier; updating a further database by storing the identifier in association with a time stamp; generating the key event notification in response to updating the second database; and retrieving the updated key set from the key database in response to receiving the key event notification. The further database may be configured to generate the key event notification in response to the further database being updated, or a change to the second database.

The means for generating the new keys; storing the new keys in the key database in association with an identifier; and updating a further database by storing the identifier in association with a time stamp, may comprise one or more servers or processing devices executing one or more programs such as server tasks or serverless functions. The one or more processing devices may belong to the token server, or a separate server, or a distributed computing infrastructure (referred to as a `serverless' system).

The system may be a geographically distributed access/authentication system including multiple token servers in the same and/or different geographic locations/regions.

According to a further aspect of the disclosure, there is provided a system for token-based authorisation of user access to a resource and/or authentication of a user, comprising the token management system as aforesaid, wherein preferably access to the resource is authorised and/or a user is authenticated in dependence on a signed token being verified by a verifying entity, and/or in dependence on a token being signed and/or verified using a key from the key set.

According to another aspect of the present disclosure, there is provided a computer program product for carrying out any of the aforesaid methods.

### Token sets

According to another aspect of the present disclosure, there is described a set-based authorisation method comprising: generating a plurality of access tokens defining a set; and generating one refresh token corresponding to the said plurality of access tokens, wherein the refresh token defines at least one time frame within which said plurality of access tokens can be refreshed.

Preferably, time frames are defined for each access token in a set in the refresh token corresponding to the set. As only one refresh token needs to be exchanged and managed to control multiple resource access tokens there are reduced storage requirements, less computational resource may be required to read and less packages need to be sent between servers for managing access to resources.

Preferably, the refresh token defines a time frame for each access token in the set.

Beneficially, only one refresh token needs to be exchanged and managed to control multiple resource access tokens.

Preferably, the method further comprises sending said plurality of access tokens and the corresponding one refresh token to a client.

Beneficially, only one refresh token needs to be exchanged and managed to control multiple resource access tokens.

Preferably, the method further comprises receiving a respective access request corresponding to each of said plurality of access tokens; and requesting an identification token from a client, the identification token corresponding to one or more of the access requests; and receiving an identification token from the client corresponding to one or more of the access requests.

Preferably, the method further comprises: receiving a further access request; requesting an identification token from a client; and receiving an identification token from the client.

Preferably, the method further comprises: receiving the refresh token from the client; generating a new access token; adding the new access token to the set; and defining, in the refresh token, a time frame within which the new access token can be refreshed.

Beneficially, this enables the client to manage only one refresh token for each access token added.

Preferably, the method further comprises sending the new access token and the refresh token to the client.

Preferably, each access token having a refresh capability, a plurality of access tokens being associated with a predetermined client.

Preferably, the method further comprises refreshing at least one of the plurality of access tokens using the refresh token.

The method beneficially provides existing capability of refresh tokens with reduced computation since only one refresh token is required for a set.

Preferably, refreshing the at least one of the plurality of access tokens using the refresh token comprises: receiving an access request for a previously accessed destination; receiving a corresponding refresh token; determining whether the access request for the previously accessed destination is valid based on the refresh token.

Preferably, the method further comprises, in response to a determination that the access request is valid: generating an access token corresponding to the previously accessed destination; sending the generated access request and the refresh token to the client.

Preferably, the method further comprises discarding an expired refresh token and issuing a new refresh token.

Beneficially, this means that there is only one token to discard to issue new refresh tokens for an entire set. Discarding may been deleting a refresh token or setting all field corresponding to access tokens in a refresh token as null.

Preferably, the method further comprises: receiving an access request for a previously accessed destination; receiving a corresponding refresh token; determining that the corresponding refresh token has expired; requesting an identification token from the client.

Beneficially, only one token needs to be checked for expiration, reducing the computational burden of managing tokens.

Preferably, the method further comprises revoking the access refresh capabilities for the predetermined client.

Beneficially, only one refresh token needs to be sent, accessed/ wiped to revoke access for a client.

Preferably, revoking the access refresh capabilities for a predetermined client comprises: receiving a revocation request comprising an identification token; requesting, from a client, a refresh token associated with the identification token; and removing the time frames defined within the refresh token, wherein preferably removing any time frames defined within the resource token comprises deleting the refresh token.

Preferably, the plurality of access tokens may be one or more of: an API token; a data token; a restricted token; and a third party token.

Preferably, the one refresh token corresponds to a set of access tokens.

According to another aspect of the present disclosure, there is provided a token-based method of authorising user access to a resource and/or authenticating a user, wherein token keys are managed according to the aforesaid method, and wherein preferably user access to the resource is authorised and/or a user is authenticated in dependence on a signed token being verified by a verifying entity.

According to another aspect of the present disclosure, there is provided, a set-based authentication system comprising: means for (preferably one or more servers with one or more processing devices and associated memory for) generating a set comprising a plurality of access tokens; and means for (preferably one or more servers with one or more processing devices and associated memory for) generating one refresh token corresponding to the said plurality of access tokens, wherein the refresh token defines at least one time frame within which said plurality of access tokens can be refreshed.

Preferably, the refresh token defines a time frame for each access token in the set.

Preferably, the system comprises means for (preferably one or more servers with one or more processing devices and associated memory for) sending said plurality of access tokens and the corresponding one refresh token to a client.

Preferably, the system comprises means for (preferably one or more servers with one or more processing devices and associated memory for): receiving a respective access request corresponding to each of said plurality of access tokens; and requesting an identification token from a client, the identification token corresponding to one or more of the access requests; and receiving an identification token from the client corresponding to one or more of the access requests.

Preferably, the system comprises means for (preferably one or more servers with one or more processing devices and associated memory for): receiving a further access request; requesting, an identification token from a client; and receiving an identification token from the client.

Preferably, the system comprises means for (preferably one or more servers with one or more processing devices and associated memory for): receiving the refresh token from the client; generating a new access token; adding the new access token to the set; and defining, in the refresh token, a time frame within which the new access token can be refreshed.

Preferably, the system comprises means for (preferably one or more servers with one or more processing devices and associated memory for): sending the new access token and the refresh token to the client.

Preferably, each access token having a refresh capability, a plurality of access tokens being associated with a predetermined client.

Preferably, the system comprises means for (preferably one or more servers with one or more processing devices and associated memory for): refreshing at least one of the plurality of access tokens using the refresh token.

Preferably, refreshing the at least one of the plurality of access tokens using the refresh token comprises: receiving an access request for a previously accessed destination; receiving a corresponding refresh token; determining whether the access request for the previously accessed destination is valid based on the refresh token.

Preferably, the system comprises means for (preferably one or more servers with one or more processing devices and associated memory for), in response to a determination that the access request is valid: generating an access token corresponding to the previously accessed destination; sending the generated access request and the refresh token to the client server.

Preferably, the system comprises means for (preferably one or more servers with one or more processing devices and associated memory for) discarding an expired refresh token and issuing a new refresh token.

Preferably, the system comprises means for (preferably one or more servers with one or more processing devices and associated memory for): receiving an access request for a previously accessed destination; receiving a corresponding refresh token; determining that the corresponding refresh token has expired; requesting an identification token from the client.

Preferably, the system comprises means for (preferably one or more servers with one or more processing devices and associated memory for) revoking the access refresh capabilities for the predetermined client.

Preferably, revoking the access refresh capabilities for a predetermined client comprises: receiving a revocation request comprising an identification token; requesting, from a client, a refresh token associated with the identification token; and removing the time frames defined within the refresh token. Preferably, revoking the access refresh capabilities comprises removing any time frames defined within the resource token comprises deleting the refresh token.

Preferably, the plurality of access tokens comprises one or more of: an API token; a data token; a restricted token; and a third party token.

Preferably, the one refresh token corresponds to a set of access tokens.

In another aspect of the present disclosure, there is provided, a token-based system of authorising user access to a resource and/or authenticating a user, wherein token keys are managed according to the aforesaid system, and wherein, preferably user access to the resource is authorised and/or a user is authenticated in dependence on a signed token being verified by a verifying entity.

Preferably, the one or more servers are one or more token servers.

Preferably, the system further comprises: one or more client servers; one or more authentication servers; one or more resource servers; one or more databases associated the servers; and one or more caches associated with the servers.

According to another aspect of the present disclosure, there is provided a computer program product for carrying out any of the aforesaid methods.

### Client clock drift

According to another aspect of the present disclosure, there is provided a method of synchronising an authorisation system, the method comprising: receiving an indication of a time at a time authority; comparing the indication of a time to a clock corresponding to a server; determining an error in the clock corresponding to the server based on the indication of a time; and adjusting the clock based on the determined error.

By adjusting the clock corresponding to the server based on an error relative to the time authority, the system may be synchronised to a time at the time authority.

Preferably, the indication of a time is received in a refresh token.

Beneficially, this results in the server clock being adjusted in line with the refresh token which minimises attempts to retrieve invalid tokens.

Preferably, the method further comprises receiving an access token with a corresponding expiry time and determining when the access token expires based on the adjusted clock and the corresponding expiry time.

By determining when the access tokens expires based on the adjusted clock and the corresponding expiry time, the access token expiry time is consistent with the authority time.

Preferably, the method further comprises receiving a second refresh token comprising an indication of a second time; comparing the second indication of a time to the clock corresponding to the server; and determining a second error in the clock corresponding to the server based on the second indication of a time.

The second refresh token may be a refresh token corresponding to a different set of access tokens or may be the second time the first refresh token is retrieved (i.e. the second time the first refresh token is sent back to the server). In both cases, updated information on clock drift may be obtained from the refresh token.

Preferably, the method further comprises comparing the second error to a threshold; and in response to the second error exceeding the threshold, adjusting the clock based on the second error.

By adjusting the clock based on the second error when a threshold is exceeded, significant clock drifts are accounted for whilst not incurring any unnecessary computation costs.

Preferably, the method further comprises receiving a second refresh token; and determining an elapsed time between the refresh token and the second refresh token.

Preferably, the method further comprises comparing the elapsed time to a second threshold; in response to the amount of elapsed time exceeding the second threshold: comparing the second indication of a time to the clock corresponding to the server; determining a second error in the clock corresponding to the server based on the second indication of a time; adjusting the clock based on the second error.

The second refresh token may be a refresh token corresponding to a different set of access tokens or may be the second time the first refresh token is retrieved (i.e. the second time the first refresh token is sent back to the server). In both cases, depending on the time difference between the retrieval a decision may be made as to whether to calculate an error in clock drift which minimises unnecessary computation for adjusting clock drift.

Preferably, the time corresponds to an epoch time of a token server.

Beneficially, this ensures the server that is the time authority is the server issuing tokens for accessing a resource which minimises exchanging of invalid tokens.

Preferably, a travel time from the token server is discounted.

The disclosure extends to a token-based method of authorising user access to a resource and/or authenticating a user, wherein token keys are managed according to the method as aforesaid, and wherein preferably user access to the resource is authorised and/or a user is authenticated in dependence on a signed token being verified by a verifying entity.

According to a further aspect of the disclosure, there is provided a synchronised authentication system comprising: means for (preferably one or more servers with one or more processing devices and associated memory) for receiving a second refresh token and determining a number of seconds between a refresh token and the second refresh token.

Preferably, the indication of a time is received in a refresh token.

Preferably, the system comprises means for (preferably one or more servers with one or more processing devices and associated memory for): receiving an access token with an expiry time and determining when the access token expires based on the adjusted clock and the expiry time.

Preferably, the system comprises means for (preferably one or more servers with one or more processing devices and associated memory for): receiving a second refresh token comprising an indication of a second time; comparing the second indication of a time to the clock corresponding to the server; and determining a second error in the clock corresponding to the server based on the second indication of a time.

Preferably, the system comprises means for (preferably one or more servers with one or more processing devices and associated memory for): comparing the second error to a threshold; and in response to the second error exceeding the threshold, adjusting the clock based on the second error.

Preferably, the system comprises means for (preferably one or more servers with one or more processing devices and associated memory for): receiving a second refresh token; and determining a number of seconds between the refresh token and the second refresh token.

Preferably, the system comprises means for (preferably one or more servers with one or more processing devices and associated memory for): comparing the number of seconds to a second threshold; in response to the number of seconds exceeding the second threshold: comparing the second indication of a time to the clock corresponding to the server; determining a second error in the clock corresponding to the server based on the second indication of a time; adjusting the clock based on the second error.

Preferably, the time corresponds to an epoch time of a token server.

Preferably, it is assumed that a travel time from the token server is negligible.

Preferably, the system comprises means for (preferably one or more servers with one or more processing devices and associated memory for) receiving the second refresh token is a client server.

Preferably, the system further comprises: one or more token servers, wherein at least one of the token servers is the time authority.

According to another aspect of the present disclosure, there is described a system for token-based authorisation of user access to a resource and/or authentication of a user, comprising the system as aforesaid, wherein preferably user access to the resource is authorised and/or a user is authenticated in dependence on a signed token being verified by a verifying entity. According to another aspect of the present disclosure, there is provided a computer program product for carrying out any of the aforesaid methods.

### Hybrid logical clock

According to another aspect of the present disclosure, there is provided a method comprising: storing, in a cache of a token server, data relating to a token issued to a client, comprising storing a first hybrid logical clock value associated with a user of the client; and receiving a token from the client, wherein the token contains a second hybrid logical clock value associated with the user of the client.

Preferably, data is retrieved from different memory locations in dependence on the relationship between the second hybrid logical clock value and the first hybrid logical clock value.

Preferably, the second hybrid logical clock value is less than or equal to the first hybrid logical clock value, the data relating to the token is retrieved from the cache and used to service a request from the client.

Preferably, the request from the client comprises a request to validate or refresh the token. Preferably, the method comprises: if the second hybrid logical clock value is less than or equal to the first hybrid logical clock value, validating or refreshing the token using the data retrieved from the cache.

Preferably, if the second hybrid logical clock value is more than the first hybrid logical clock value: data relating to the token is retrieved from a database associated with the token server and used to service a request from the client.

Preferably, if the request from the client comprises a request to validate or refresh the token, the method comprises: if the second hybrid logical clock value is more than the first hybrid logical clock value, validating or refreshing the token using the data retrieved from the database.

Preferably, the method further comprises replicating data relating to tokens issued by one more further token servers from one or more further databases associated with the one or more further token servers.

Preferably, the method further comprises: storing, in the database associated with the token server, the data relating to the token issued to a client, comprising storing the first hybrid logical clock value associated with a user of the client.

Preferably, the method further comprises: issuing, from the token server, a resource access token to the client in exchange for an identity provider token provided by the client; and inserting in the resource access token the first hybrid logical clock value associated with a user of the client at the time of issuing the resource access token.

Preferably, the first hybrid logical clock value is inserted in a payload of the token.

Preferably, the first hybrid logical clock value is encoded in the token.

Preferably, each hybrid logical clock value comprises a physical clock component representing a physical time property of an event relating to the user.

Preferably, the physical time property is based on a network time protocol timestamp.

Preferably, each hybrid logical clock value comprises a counter component representing a chronological property of an event relating to the user.

Preferably, the chronological property is based on the sequence of the event in relation to other events.

Preferably, the method further comprises incrementing the counter upon each event.

Preferably, the method further comprises incrementing the counter if the token server determines that the physical time property for a further token server is earlier than the physical time property for the token server.

Preferably, the method further comprises resetting the counter to zero if the token server determines, preferably at an event relating to the user, that the physical time property for a further token server is earlier than the physical time property for the token server.

Preferably, the further token server is located in a geographical region that is different to the geographical region in which the token server is located.

Preferably, the method further comprises the token server notifying at least one further token server of an updated hybrid logical clock value for the user upon incrementing the counter.

Preferably, the event is an issuance of a token by the token server.

Preferably, the event is a login event, preferably comprising authentication of the user by an authentication server.

Preferably, the event is a logout event.

Preferably, the event is a change in the permissions granted to a user.

Preferably, the cache is local to the token server.

Preferably, the token is a refresh token.

According to another aspect of the present disclosure, there is provided, a method comprising: storing, in a cache of a token server, data relating to a token issued to a client, comprising storing a first hybrid logical clock value associated with a user of the client; receiving, at the token server, a token from the client, wherein the token contains a second hybrid logical clock value associated with the user of the client; and if the second hybrid logical clock value is less than or equal to the first hybrid logical clock value: retrieving, from the cache, the data relating to the token and using the data retrieved from the cache to service a request from the client.

According to another aspect of the present disclosure, there is provided, a token-based method of authorising user access to a resource and/or authenticating a user, wherein token keys are managed according to the method of aforesaid, and wherein preferably user access to the resource is authorised and/or a user is authenticated in dependence on a signed token being verified by a verifying entity.

According to another aspect of the present disclosure, there is provided, an authentication system comprising: means for (preferably one or more servers with one or more processing devices and associated memory for) storing, in a cache of a token server, data relating to a token issued to a client, the means for storing data being arranged to store: a first hybrid logical clock value associated with a user of the client; and receive a token from the client, wherein the token contains a second hybrid logical clock value associated with the user of the client.

Preferably, data is retrieved from different memory locations in dependence on the relationship between the second hybrid logical clock value and the first hybrid logical clock value.

Preferably, if the second hybrid logical clock value is less than or equal to the first hybrid logical clock value, the data relating to the token is retrieved from the cache and used to service a request from the client.

Preferably, the request from the client comprises a request to validate or refresh the token. Preferably the system comprises means for (preferably one or more servers with one or more processing devices and associated memory for): if the second hybrid logical clock value is less than or equal to the first hybrid logical clock value, validating or refreshing the token using the data retrieved from the cache.

Preferably, the means for validating or refreshing the token is arranged to, if the second hybrid logical clock value is more than the first hybrid logical clock value: retrieve data relating to the token from a database associated with the token server and used to service a request from the client.

Preferably, if the request from the client comprises a request to validate or refresh the token, the means for validating or refreshing the token is arranged to: if the second hybrid logical clock value is more than the first hybrid logical clock value, validating or refreshing the token using the data retrieved from the database.

Preferably, the system comprises means for (preferably one or more servers with one or more processing devices and associated memory for) storing, in the database associated with the token server, the data relating to the token issued to a client, comprising storing the first hybrid logical clock value associated with a user of the client.

Preferably, the system comprises means for (preferably one or more servers with one or more processing devices and associated memory for): storing, in the database associated with the token server, the data relating to the token issued to a client, comprising storing the first hybrid logical clock value associated with a user of the client.

Preferably, the system comprises means for (preferably one or more servers with one or more processing devices and associated memory for): issuing, from the token server, a resource access token to the client in exchange for an identity provider token provided by the client; and inserting in the resource access token the first hybrid logical clock value associated with a user of the client at the time of issuing the resource access token.

Preferably, the first hybrid logical clock value is inserted in a payload of the token.

Preferably, the first hybrid logical clock value is encoded in the token.

Preferably, each hybrid logical clock value comprises a physical clock component representing a physical time property of an event relating to the user.

Preferably, the physical time property is based on a network time protocol timestamp.

Preferably, each hybrid logical clock value comprises a counter component representing a chronological property of an event relating to the user.

Preferably, the chronological property is based on the sequence of the event in relation to other events.

Preferably, the system comprises means for (preferably one or more servers with one or more processing devices and associated memory for) further for incrementing the counter upon each event.

Preferably, the system comprises means for (preferably one or more servers with one or more processing devices and associated memory for) incrementing the counter if the token server determines that the physical time property for a further token server is earlier than the physical time property for the token server.

Preferably, the system comprises means for (preferably one or more servers with one or more processing devices and associated memory for) resetting the counter to zero if the token server determines, preferably at an event relating to the user, that the physical time property for a further token server is earlier than the physical time property for the token server.

Preferably, the system comprises means for (preferably one or more servers with one or more processing devices and associated memory for) notifying at least one further token server of an updated hybrid logical clock value for the user upon incrementing the counter.

Preferably, the event is an issuance of a token by the token server.

Preferably, the event is a login event, preferably comprising authentication of the user by an authentication server.

Preferably, the event is a logout event.

Preferably, the event is a change in the permissions granted to a user.

Preferably, the cache is local to the token server.

Preferably, the token is a refresh token.

According to another aspect of the present disclosure, there is provided an authentication system comprising: means for (preferably one or more servers with one or more processing devices and associated memory for) storing, in a cache of a token server, data relating to a token issued to a client, comprising storing a first hybrid logical clock value associated with a user of the client; receiving, at the token server, a token from the client, wherein the token contains a second hybrid logical clock value associated with the user of the client; and if the second hybrid logical clock value is less than or equal to the first hybrid logical clock value: retrieving, from the cache, the data relating to the token and using the data retrieved from the cache to service a request from the client.

Preferably, the system comprises: a token server; and a cache of the token server, the cache configured to store data relating to a token issued to a client, including a first hybrid logical clock value associated with a user of the client, wherein the token server is configured to receive a token from the client, the token containing a second hybrid logical clock value associated with the user of the client, and wherein, if the second hybrid logical clock value is less than or equal to the first hybrid logical clock value, the token server is configured to retrieve, from the cache, the data relating to the token and to use the data retrieved from the cache to service a request from the client.

According to another aspect of the present disclosure, there is provided, a system for token-based authorisation of user access to a resource and/or authentication of a user, comprising the system aforesaid wherein preferably user access to the resource is authorised and/or a user is authenticated in dependence on a signed token being verified by a verifying entity.

Authentication is typically used herein to refer to verifying the identity of a user.

Authorisation is typically used herein to refer to the step of granting access to a server resource following authentication.

According to another aspect of the present disclosure, there is provided a method for token-based authorisation.

The method may comprise storing, in a cache of a token server, data relating to tokens issued to one or more clients. The cache used by the token server may be local to the token server. The data may include the root token which acts as a root for a given login. The data may also include data specific to the user of a given client, such as an identifier relating to the user from an identify provider (which initially authenticated the user) or user attributes. Along the data, the method may comprise also storing a first hybrid logical clock value associated with a user of the client. The first hybrid logical clock value may be the value of a hybrid logical clock for a user, as determined by the token server (or a related token server in the same region) at a particular time, such as the time the token was issued, or the time at which the server last updated its data in relation to that token.

The method may comprise receiving, at the token server, a token from the client. For example, the client may present a refresh token to the token server and request a refreshed access token. The token received from the client at the token server may contain a second hybrid logical clock value associated with the user of the client. The second hybrid logical clock value may be the value of the hybrid logical clock for the user, as determined by a further token server or by the client, at a particular time, such as the time at which the token was issued or the time at which a state of the user (such as a login state) was last updated.

If the second hybrid logical clock value is less than or equal to the first hybrid logical clock value, the tokens server may retrieve, from the cache, the data relating to the token. Then, the token server can use the data retrieved from the cache to service a request from the client.

The hybrid logical clock value may be user specific in the sense that each user has an assigned hybrid logical clock that is maintained by the token server.

The request from the client may comprise a request to validate or refresh the token. In this case, the method comprises - if the second hybrid logical clock value is less than or equal to the first hybrid logical clock value - validating or refreshing the token using the data retrieved from the cache.

In this way, the token server can infer from comparing the hybrid logical clock value stored in its cache and the hybrid logical clock value carried by the token it has received, whether or not the data is has stored in its cache remains valid, or whether an action in relation to the user of which the server is currently unaware has rendered invalid the data in the cache. Based on this inference, the server can use the data stored in its cache to service a client request - without recourse to an external database - when that data is valid.

If the second hybrid logical clock value is more than the first hybrid logical clock value, the token server may retrieve, from a database associated with the token server, data relating to the token. The token server may then use that data retrieved from the database to service a request from the client.

The request from the client may comprise a request to validate or refresh the token. In this case, the method comprises - if the second hybrid logical clock value is more than the first hybrid logical clock value - validating or refreshing the token using the data retrieved from the database.

In this way, the token server can again infer from comparing the hybrid logical clock value stored in its cache and the hybrid logical clock value carried by the token it has received, whether or not the data is has stored in its cache remains valid, and therefore whether it must query the database to obtain the most up-to-date data for a user. The token server may query the database for the most up-to-date data for a user only when the token server infers from the hybrid logical value of a token it receives that the data it has stored in its cache is invalid for the respective user and must therefore be updated.

The database described above may be replicated between different locations. For example, the database associated with the token server may be replicated with another database associated with a further token server. The token server and the further token server may be located in different locations and indeed in different geographical regions. Each token server in each region may store in its respective database all information relating to the tokens issued to each user, and this information is replicated between the databases, such that a token server in one region can eventually retrieve from its associated database information about tokens issued by another token server to a give user.

The method may therefore involve replicating, in the database associated with the token server, data relating to tokens issued by one more further token servers from one or more further databases associated with the one or more further token servers. Storing the data relating to the token issued to a client may also comprise storing the first hybrid logical clock value associated with a user of the client. For example, a token sever may issue a token to client at a particular time, and write to the database information about the token issued to the client along with a hybrid logical clock timestamp for that particular time.

The method may also comprise issuing, from the token server, a token to the client. This step may take place before and/or after the step of the token server receiving a token from the client. The token issued by the token server may be a resource access token and/or a refresh token. Initially, the resource access token and/or a refresh token may be issued in exchange for an identity provider token provided by the client to the token server. Later, the resource access token may be issued to the client in exchange for presentation of a valid refresh token from the client to the token server.

When a token is issued by the token server, the method may comprise inserting in the token (e.g., in the resource access token) the first hybrid logical clock value associated with a user of the client at the time of issuing the token. In this way, when the token is carried between the various servers the token will carry with it information about the hybrid logical clock value on the token server from which it was issued at the time it was issued. This information can then be used to determine the chronology of different actions taken in relation to the user, and therefore the validity of data relating to a user or relating to the tokens issued to a user.

The first hybrid logical clock value may be inserted in a payload of the token. The first hybrid logical clock value may be encoded in the token (e.g., encoded in the payload of the token). The encoding may be simply in binary format, for example, or the encoding may be cryptographic encoding such that a recipient of the token must validate the token to decrypt the hybrid logical clock value in order to read the value.

Each hybrid logical clock value (i.e., each of the first and second hybrid logical clock values) may comprise a physical clock component. The physical clock component may represent a physical time property of an event relating to the user. In this context, the "physical time" property may refer to a "wall clock" time. The physical time property of an event may be the wall clock time at which the event took place, for example. The physical time property may be determined with reference to a network time protocol timestamp. For example, the physical time property may be determined by reference to the last network time protocol packet received by the token server.

Each hybrid logical clock value may alternatively or additionally comprise a counter component. Where the hybrid logical clock value comprises both a physical time component and a counter component, the physical time value and the value of the counter may combine to provide the hybrid logical clock value.

The counter may represent a chronological property of an event relating to the user, such as the sequence of an event in relation to other events. For example, the counter may be incremented upon each event, such that it is possible to derive the chronology of data stored at two different events. For example, when a user logs into the system the hybrid logical clock value for the user may be incremented to 1, and later when the user logs out of the system the counter may be incremented to 2, such that it is possible to determine that data stored with an associated hybrid logical clock value of 1 must have been stored before the log out event.

The method may comprise incrementing the counter if the token server determines that the physical time property for a further token server is earlier than the physical time property for the token server. In this way, the token server can maintain a monotonically increasing time between the servers, such that it is not possible for one server to receive data from another server which has an earlier timestamp. If the token server determines that the physical time property for a further token server is earlier than the physical time property for the token server, the token server may (a) increment the physical time property for the further token server such that it is the same as or later than the physical time property for the token server and (b) increment the counter to represent a later combined hybrid logical time value. If later the token sever determines that the physical time property for the further token server is later than the physical time property for the token server, the token server may reset the counter to zero. Preferably, the determination of the relatively physical time between different token servers is made upon an event, such as the issuance of a token or the receipt of a token.

The further token server in this case may be located in a geographical region that is different to the geographical region in which the token server is located, such that the physical times of the two servers are liable to draft from one another due to network delays in relation to the network time protocol.

The method may comprise the token server notifying at least one further token server of an updated hybrid logical clock value for the user upon incrementing the counter. For example, the token server may broadcast to other token servers in the same region information about an updated hybrid logical clock value for a give user. This means that the other token servers in the region can check whether their cache data is up-to-date (i.e., whether the cached data has a hybrid logical clock value that is the same as the value broadcast it) and it not it can query the database at the most convenient time to update its cache.

The events which cause the hybrid logical clock value for a user may include:
- the issuance of a token by the token server, preferably where the issuance of a token by the token server is associated with a new login event
- a login event, preferably comprising authentication of the user by an authentication server
- a logout event
- a change in the permissions granted to a user, such as a "step up" or a "step down" in the permission granted to user.

According to another aspect of the present disclosure, there is provided a system for carrying out any of the methods as aforementioned. The system may comprise: a token server; and a cache of the token server, the cache configured to store data relating to a token issued to a client, including a first hybrid logical clock value associated with a user of the client. The token server may be configured to receive a token from the client, the token containing a second hybrid logical clock value associated with the user of the client. If the second hybrid logical clock value is less than or equal to the first hybrid logical clock value, the token server may be configured to retrieve, from the cache, the data relating to the token and to use the data retrieved from the cache to service a request from the client.

According to another aspect of the present disclosure, there is provided a computer program product for carrying out any of the aforesaid methods.

Any apparatus feature and/or system feature described herein may also be provided as a method feature, and vice versa. As used herein, means plus function features may be expressed alternatively in terms of their corresponding structure.

Any feature in one aspect of the disclosure may be applied to other aspects of the disclosure, in any appropriate combination. In particular, method aspects may be applied to apparatus aspects and/or system aspects, and vice versa. Furthermore, any, some and/or all features in one aspect can be applied to any, some and/or all features in any other aspect, in any appropriate combination. It should also be appreciated that particular combinations of the various features described and defined in any aspects of the present disclosure can be implemented and/or supplied and/or used independently. As used herein, means plus function features may be expressed alternatively in terms of their corresponding structure, such as a suitably programmed processor and associated memory.

The disclosure also provides a computer program or a computer program product for carrying out any of the methods described herein, and/or for embodying any of the apparatus features described herein. The disclosure also provides a non-transitory computer readable medium having stored thereon a program for carrying out any of the methods described herein and/or for embodying any of the apparatus features described herein.

The disclosure also provides a signal embodying a computer program or a computer program product for carrying out any of the methods described herein, and/or for embodying any of the apparatus features described herein, a method of transmitting such a signal, and a computer product having an operating system which supports a computer program for carrying out the methods described herein and/or for embodying any of the apparatus features described herein.

Furthermore, features implemented in hardware may generally be implemented in software, and vice versa. Any reference to software and hardware features herein should be construed accordingly.

### Brief description of the drawings

Aspects of the present disclosure will now be described, by way of example only, with reference to the accompanying drawings having like-reference numerals, in which:
**Figure 1** is a block diagram showing an exemplary high-level architecture for token-based authorisation, including data and token exchange patterns between a client, an authentication server, a token server, and a resource server;
**Figure 2** is a block diagram showing an exemplary architecture for token-based authorisation in a geographically distributed system, including token exchange patterns between a client and token servers located in different geographical regions;
**Figure 3** is a schematic diagram illustrating key rotation;
**Figure 4** is a schematic diagram illustrating a key set including three separate key subsets holding keys for the last, current and next token signing period according to an embodiment of the disclosure;
**Figure 5** is a schematic diagram of a method of token key management involving periodic key rotation using the key set of Figure 4, according to an embodiment the present disclosure;
**Figure 6** is a schematic diagram illustrating how keys are rotated through the three key subsets of the key set upon each key rotation according to an embodiment of the disclosure;
**Figure 7** is a schematic block diagram showing an exemplary architecture for managing key rotation in a geographically distributed system;
**Figure 8** is a schematic diagram of a key rotation operation;
**Figure 9** is a flow diagram for a method of providing access of a resource to a client using user-defined token sets;
**Figure 10** is a flow diagram for providing access of a resource to a client with client-defined token sets;
**Figure 11** is a flow diagram for refreshing access tokens;
**Figure 12** is a flow diagram for revoking access;
**Figure 13** shows an example format of a refresh token for refreshing a set of access tokens;
**Figure 14** is a flow diagram of a method for syncing a clock of a client server to a clock of a designated time authority server;
**Figure 15** is a flow diagram of a method 1500 of using a hybrid logical clock so that a server knows in advance whether the data it holds in its cache remains valid;
**Figure 16** is a block diagram showing token and data exchange patterns, when a hybrid logical clock value is included in a resource access token;
**Figure 17** is a block diagram showing the case where a hybrid logical clock value carried by a token subsequently received at the token server is more than the hybrid logical clock value stored in a token server cache; and
**Figure 18** is a block diagram showing the case where a hybrid logical clock value carried by a token subsequently received at the token server is less than the hybrid logical clock value stored in a token server cache.

### Detailed description

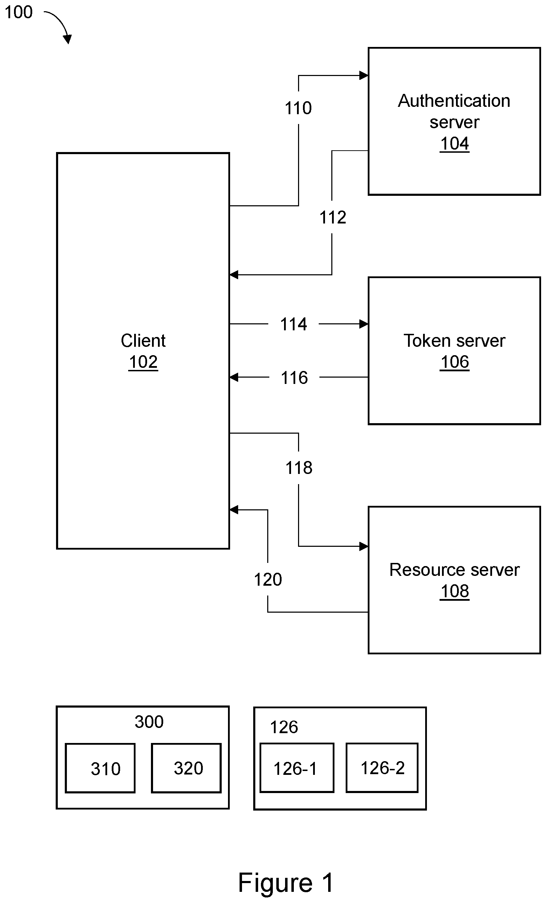

Figure 1 is a block diagram showing an exemplary high-level architecture for a token-based authorisation system 100 for authenticating and/or authorising users, according to embodiments of the present disclosure. In this example, a client 102, which may be a web browser application being operated by a user, is attempting to retrieve a resource (i.e., data) from a resource server 108. The resource server 108 may be configured to allow the client 102 to retrieve the data only if the client 102 (or the user associated with the client 102) has appropriate permissions to retrieve the data, such as a licence to use the data.

In conventional authorisation systems, this would require a user to provide login credentials (such as a username and a password) to verify their identify and thereby demonstrate their permission to access the data. This in turn would require the data provider to maintain a database of the login credentials of users in order to verify those credentials when they are provided by user. For reasons of data security and data protection, this is undesirable.

Therefore, the system 100 of Figure 1 includes a separate authentication server 104 which acts as an identity provider to authenticate the user and issue identity provider (IdP) access tokens to the client 102. The client 102 can provide these IdP tokens, at a separate token server 106, in exchange for one or more resource access tokens, issued by the data provider, enabling the client 102 to access the data on the resource server 108. The client 102, authentication server 104, token server 106, and resource server 108 are connected over a network to enable the exchange of tokens and data between one another via data flows (110, 112, 114, 116, 118, 120). Data flows 110, 112, 114, 116, 118, 120 show a flow of data between servers. More specifically, data flows 110, 114, 118 show a flow of data from the client server 102 and dataflows 112, 116 and 120 show a flow of data to the client server 102. This architecture enables the data provider to avoid having to maintain a database of user login credentials, because authentication of users' identities is outsourced to the authentication server 104, which may be operated by a third-party organisation separate from the data provider organisation.

In the system 100 of Figure 1, a user of a client 102 attempting to access a resource on the resource server 106 first provide in a flow of data 110 from the client 102 to the authentication server 104, their login credentials, for example by entering a username and password into a web browser. The authentication server 104 may, for example, provide a Microsoft Entra^{®} tenant associated with an organisation to which the user of the client 102 belongs. Having verified the identity of the user via their login credentials, the authentication server 104 generates an IdP access token and issues the token back to the client 102 in a flow of data 112 from the authentication server 104 to the client 102. The IdP access token defines the identity of the user, and is digitally signed by the issuer, using public-key cryptography, to establish the authenticity of the IdP access token.

The client 102 then sends the IdP token received from the authentication server 104 to the token server 106 in a flow of data 114 from the client 102 to the token server 106. The token server 106 is operated by the data provider which provides the data stored on the resource server 108 that the user is attempting to access. The token server 106 verifies the signature of the IdP token using a corresponding public key issued by the identity provider and generates one or more corresponding resource access tokens which are issued back to the client 102 in a flow of data 116 from the token server to the client 102. Each resource access token defines the resource access permissions granted to the user and is itself again digitally signed by the data provider at the token server 106 as the issuer of the token, again using public-key cryptography, to establish the authenticity of the resource access token. The client 102 can then submit the resource access token(s) to the resource server 108 in a flow of data 118 from the client 102 to the resource server 108 which in turn verifies the signature of the token(s) using a corresponding public key issued by the data provider and transmits the corresponding data that the user is attempting to access back to the client 102 in a flow of data 120 from the resource server 108 to the client 102.

The system 100 architecture shown in Figure 1 therefore enables the data provider to authenticate the user and grant the user access to data stored on the resource server 108 using a third-party authentication server 104, rather than directly receiving and checking login credentials provided by a user. The system 100 may further comprise a database system 300 including one or more databases storing, e.g. keys and/or other data for use in authenticating a user and/or granting the user access to data. In one example, the database system 300 includes a first database 310 for holding keys and a second database 320 for holding key identifiers, as described in more detail below. The system 100 further comprises a database system 126. The database system 126 includes a first database 126-1 and a second database 126-2.

The tokens issued by the token server 106 include two types of tokens: access tokens and refresh tokens. The access tokens enable the bearer of the token to access a resource (i.e., data) on the resource server 108. The tokens include information relating to the identity of the user of the client 102, such as the data provider's user ID for the user, and permissions granted to the user in relation to the resources on the resources server 108 that the user is permitted to access. As the access tokens act as bearer tokens, in the sense that they grant access to the client in possession of or 'bearing' the token, for security reasons the access tokens are time limited and include an expiry time/date, so that the access granted to the client is effectively revoked upon expiry of the access token. A typical lifetime for the resource access tokens is about 5 minutes, but it will be appreciated that the lifetimes are set by the data provider and will be dependent on the resources being accessed. Longer lifetimes for the access tokens can be implemented (such as up to 24 hours), but for the most secure applications a short lifetime is preferable.

Refresh tokens allow clients 102 to request new access tokens repeatedly to allow the client 102 to have continued access to resources on the resource server 108. Refresh tokens may have an unlimited expiry time, or at least a longer expiry time than the access tokens (e.g., 18 hours) to provide continued access over a typical session period. To obtain a new access token, the client 102 must send (a copy of) the refresh token to the token server 106 typically while it still holds a valid access token (i.e., before the current access token it holds has expired). In practice, the first time a client sends its IdP token to the token server 106 (e.g. upon log in) in the data flow 114 from the client 102 to the token server 106 and requests an access token, the token server 106 issues both a time limited access token and a refresh token to the client 102 in the data flow 116. The client 102 can then immediately send in the flow of data 118 the access token to the resource server 108 to retrieve in the flow of data 120, data from the resource server 108, while retaining the refresh token. Then, before the initial access token expires, the client 102 can use the refresh token to obtain a new access token from the token server 106 which is then sent to the resource server 108 to maintain continued access to data on the resource server.

The access tokens may also include multiple different types of access tokens to control access to different data and resources on the resource server 108 in different ways. Examples of four different types of access tokens are as follows:
- *API token* -these tokens may be the most general type of access tokens which grant a client 102 access to backend application programming interfaces (APIs) of the data provider so that the client 102 can access resources on the resource server.
- *Data token* - those tokens may be used to grant a client 102 access to real-time or streaming-type data from the resource server 108.
- *Restricted token* - these tokens may be used to grant clients access to more sensitive data on the resource server 108, where more constraints on the access provided to a user are appropriate. For example, these tokens may be issued only in exchange for higher level IdP tokens (such as IdP tokens generated from using multi-factor authentication) or these tokens may require token binding to the browser instance (so that it is not possible for a user to have multiple browsers concurrently accessing the data, which may be important in some applications).
- *Third party token* - these tokens can be passed to third party APIs, outside of the data provider. For example, these tokens may be used solely to carry the user identify information to a third party, with no other information.

Generating different types of access tokens to be issued to different users, or in respect of access to different categories of data, enables the token behaviours to be customised for the specific use. For example, while restricted access tokens may be bound to a browser instance, API tokens and data tokens may not be. Similarly, while restricted access tokens may have a minimum lifetime (for security reasons), data tokens may have extended lifetimes to minimise the number of access token refreshes required while streaming real-time data.

In many applications, authentication and authorisation systems, such as system 100 are required to be globally available, in the sense that they must allow users to access resources on servers from any geographical location. Similarly, in many applications such systems are required to operate with the maximum possible uptime (ideally, at "five nines" uptime, corresponding to the system being operational 99.999% of the time). To achieve this, the system 100 is ideally geographically distributed to provide redundancy in the event of regional operational problems. For example, multiple token servers 106 may be provided across multiple different geographical locations, such that when a client 102 cannot interact with a token server in one region, it can instead interact with an alternative token server 106 in a different region. Similarly, the system 100 ideally also provides redundancy within each geographical location in the event of local operational problems. For example, multiple token servers 106 may be provided within each geographical location, such that if one token server 106 fails another token server 106 in the same location will still be available.

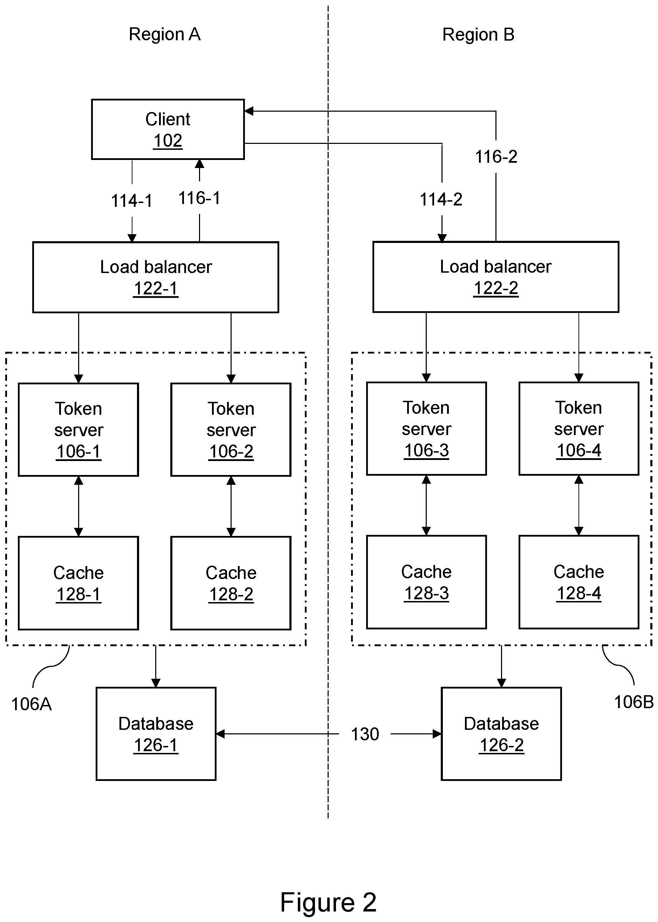

Figure 2 is a block diagram showing an exemplary architecture for token-based authorisation in a geographically distributed system. In particular, Figure 2 shows in more detail the interaction between the client 102 and the token server 106 of the system 100, as described above with respect to Figure 1, but in the context of a geographically distributed system. The lefthand side of Figure 2 represents a first geographical region, region A (e.g., the United States), and the right-hand side of Figure 2 represents a second, different geographical region, region B (e.g., the European Union), with the first and second geographical regions A, B, being illustrated as separated by the dashed line. In this example, the client 102 is located in region A, but it may be in any region.

The token servers 106 are distributed between the first and second geographical regions A, B to provide improved geographical availability, meaning that if the client 102 cannot interact with the token servers 106-1, 106-2 in the first geographical region A, the client 102 can instead interact with one of the token servers 106-3, 106-4 in the second geographical region B. In addition, each geographical region A, B includes multiple (in this example, two) token servers to provide redundancy within each region, for example in the event that a particular token server 106 in a particular geographical region fails. In this example, a first group 106A of token servers 106-1, 106-2 is located in region A (e.g., in a datacenter located in region A) and a second group 106B of token servers 106-3, 106-4 is located in region B (e.g., in a datacenter located region B). In other examples, there system 100 may be distributed over more than two geographical regions, and/or each geographical region may include a single token server 106 or more than two token servers 106.

In this example, the client 102 may be interacting with the token servers 106 either to provide an IdP access token to a token server 106 in the data flow 114 in exchange for receiving in the data flow 116 a resource access token and a refresh token, or to provide a refresh token to the token server 106 in the data flow 114 so as to receive in the data flow 116 a new access token (to replace an access token that is due to expire), as described above with reference to Figure 1.

The client 102 may interact using data flows 114-1, 116-1 preferentially with the token servers 106-1, 106-2 located in the same geographical region as the client 102, but the client 102 may alternatively interact using data flows 114-2, 116-2 with the equivalent token servers 106-3, 106-4 located in a different geographical region, for example if the client 106 cannot connect to the token servers 106-1, 106-2 in its geographical region or if the token servers 106-1, 106-2 in its region are overloaded. In other examples, the client 102 may be located in a geographical region in which no token servers are located; in this case, the client 102 may send requests to any of the token servers 106 depending on one or more factors, including, but not limited to: the client's 102 proximity to the token servers 106; the availability of the token servers 106; or load balancing requirements between the token servers 106. Each geographical region A, B includes a load balancer 122-1, 122-2 configured to distribute requests from the client 102 between the token servers 106 in the respective geographical region.

As described above with reference to Figure 1, the requests from the client 102 involve the client sending in data flow 114, over a network, an IdP token to the token server 106 to exchange the IdP token for a corresponding resource access token which is issued in data flow 116 back to the client 102 over the network. The exchange of the IdP access token for a resource access token involves the token server 106: verifying the signature of the IdP token (using the corresponding public key) to confirm that the IdP token originated from a trusted source; checking the identity of the user identified in the IdP token and confirming that the user is valid; and checking the IdP token is still valid. Each of these steps typically involves the token server 106 retrieving some reference data. For example, verifying the signature of the token involves the recipient retrieving and using a public key corresponding to the private key used (e.g. by the authentication server 104) to sign the token.

While each group 106A, 106B of token servers 106 in each region A, B has access to a respective database 126-1, 126-2, in which the reference data required to enable the token exchange may be stored, it is relatively time consuming for the token servers 106 to send a database query request over the network to the database 126-1, 126-2, have the database 126-1, 126-2 execute the query, and return the requested reference data over the network to the token server 106, particularly if the database 126-1, 126-2 is not located in the same datacenter as the corresponding server group 106A, 106B. Therefore, each group 106A, 106B preferably includes cache memories for the respective token servers 106.

In the example shown in Figure 2, each token server 106-1 to 106-4 has a corresponding cache memory 128-1 to 128-4. The cache memories 128-1 to 128-4 can be used to store the reference data required to complete the exchange of an IdP token for a resource access token, enabling the token servers 106 to service requests from client 102 "in-memory" (i.e., without recourse to an external database). This arrangement is advantageous for reducing the number of database calls and therefore the time taken to service each client request (thereby enabling each token server 106 to service more requests per unit time) and for increasing the availability of the system 100 (since the scope for errors is reduced by reducing the need to move data off the server 106).

### Key rotation

As previously discussed, tokens are signed by the issuer using a private key, and are verified (cryptographically) by the recipient or validator (such as the token server 106 for verification of IdP access tokens or the resource server 108 for verification of resource access tokens), using a public key corresponding to the private key used to sign the token. Private keys are held and maintained secret/confidential by the issuer, while the public keys are made available to recipients upon request, e.g. using a key set endpoint of the issuer's server, such as the authorisation server 104 or the token server 106. For reasons of key space exhaustion, security and limitations on key re-use, the public keys available on the endpoint (and their private key counterparts) are normally rotated or changed at a periodic frequency.

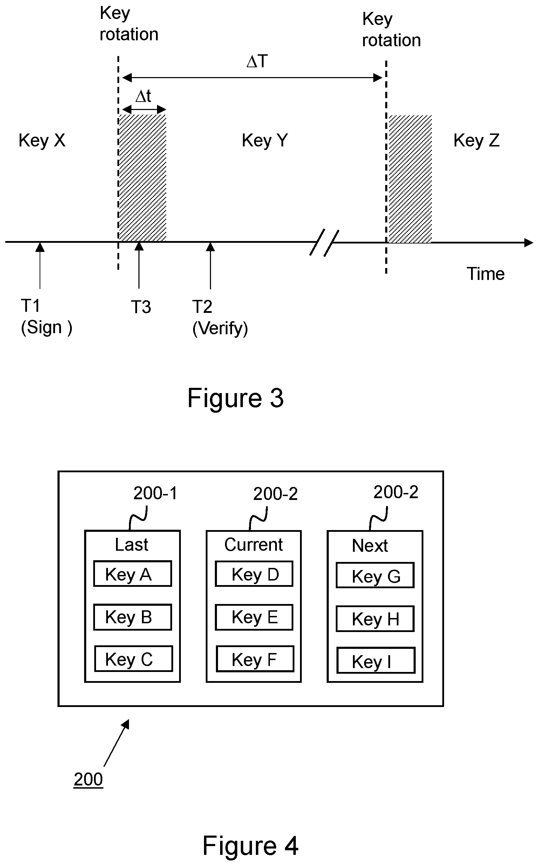

Figure 3 shows a schematic illustration of periodic key rotation over time, whereby, in this example, key X is changed to key Y and then again to key Z at the end of each token signing or rotation period ΔT. For large or geographically distributed systems, where keys must be published on multiple endpoint servers in different geographical regions or in different physical datacentres, this key rotation can cause problems associated with timing and synchronisation across the geographically distributed servers. First, a client 102 or server can receive a token which was signed with a private key which has only just been rotated in or out of use, meaning that the token cannot be verified by the recipient. This is illustrated in Figure 3, whereby a token is signed with key X at time T1, and then an attempt to verify the token is made at time T2 after key X has been rotated to key Y - the token signed with private key X cannot be verified with public key Y. Second, as the public key information is typically distributed on multiple endpoint servers which may be geographically distributed for availability reasons, it may take a period of time for the endpoint servers to synchronise and thus one or more of these endpoint servers may have an out of date set of keys for a time period after a key rotation, even though the public keys available on other endpoint servers may have changed, meaning that different public keys may be obtained from different endpoint servers at the same time. This is illustrated in Figure 3, whereby a public key set is retrieved from a given endpoint at time T3 during a period of time Δt after a key rotation (indicated by hatched area) when the key set has not yet updated at the given endpoint, such that the retrieved 'old' key set will not be able to be used to verify tokens signed with a new keys during that signing period.

According to embodiments of the present disclosure, a key set is maintained which comprises a plurality of subsets of one or more keys (e.g. key pairs) corresponding to multiple respective contiguous token signing periods (ΔT) including a current token signing period and a past and/or a future token signing period, to thereby improve robustness of the system 100 to the above timing and synchronisation problems with key rotation. Figure 4 shows a schematic block diagram of a key set 200 according to a preferred embodiment of the present disclosure. In this example, the key set 200 comprises a first key subset 200-1, a second key subset 200-2, and a third key subset 200-3, each key subset comprising keys (key pairs) for different respective consecutive/contiguous token signing periods or rotation periods. Specifically, the first key subset 200-1 contains keys A, B, C (public-private key pairs) for the last token signing period, the second key subset 200-2 contains keys D, E, F (public-private key pairs) for the current token signing period, and the third key subset 200-3 contains keys G, H, I (public-private key pairs) for the next token signing period. Tokens are only signed at the token server 106 using the keys D, E, F of the second key subset 200-2, i.e. the 'active' keys for the current token signing period. The public keys of the key set 200, including the public keys of each key subset 200-1 to 200-3, are published or otherwise made available to the client 102 or resource server 108 upon request, such that at any time a validator such as a client 102 or resource server 108 can retrieve the public keys for three consecutive token signing periods. Although three keys are shown in each key subset for illustrative purposes, it will be appreciated that in practice key subsets can include a greater or fewer number of keys, and not all keys need be of the same type. In one example, each key subset 200-1 to 200-3 includes 12 keys; 6 keys of the type `RSA 2048' (i.e. generated using the Rivet-Shamir-Adleman (RSA) public-key encryption algorithm) and 6 keys of the type 'edDSA' (i.e. generated using the Edwards-curve digital signature (ed25519) public-key encryption algorithm).

The keys A, B, C of the first key subset 200-1 are suitably used to verify tokens signed in the previous signing period which could still be active in the current signing period. The keys D, E, F of the second key subset 200-2 are used to verify tokens signed by the 'active' keys in current signing period. The keys G, H, I of the third key subset 200-3 provide forward visibility of the keys used for signing tokens in the next signing period and can be cached in advance by the validator (provided a client 102 or resource server 108 retrieves the key set 200 at a reasonable point in the current signing period), and may also allow tokens signed using a 'active' key in the current signing period to be verified using an out of date 'old' key set 200 (i.e., a key set 200 retrieved during the last signing period) which may occur e.g. in cases where a token endpoint server is queried for the key set 200 during a key rotation but is not yet up-to-date (i.e. still has the last period's key set 200) since the last key rotation. For example, if a token is signed at the token server 106 using a private part of a given key pair of the second key subset 200-2 at time T1, and the validator (i.e. the client 102 or resource server 108) has a key set 200 retrieved at time T2, then provided the time difference |T1-T2 | < 2ΔT (i.e. less than two rotation periods) the corresponding public key will be in the key set 200 at the validator and the token can be verified. Thus, no key set 200 can be ahead of the 'active' keys irrespective as to operation temporary conditions.

In this way, the multi-period key set 200 solves the timing problems associated with geographic distribution, as token servers 106 in the same or different geographic regions do not need to be synchronised simultaneously, which greatly simplifies the coordination requirements for global roll out and geographic distribution.

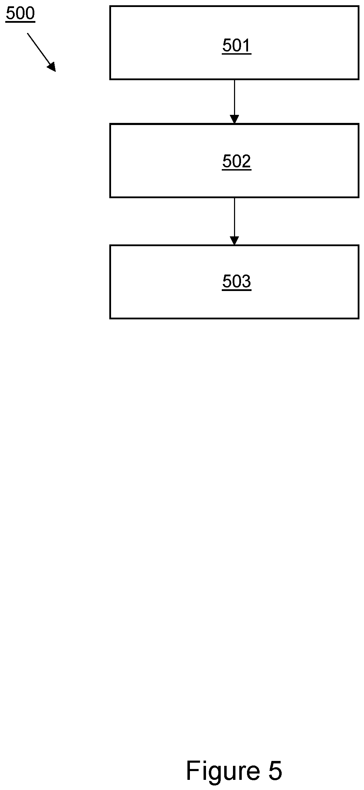

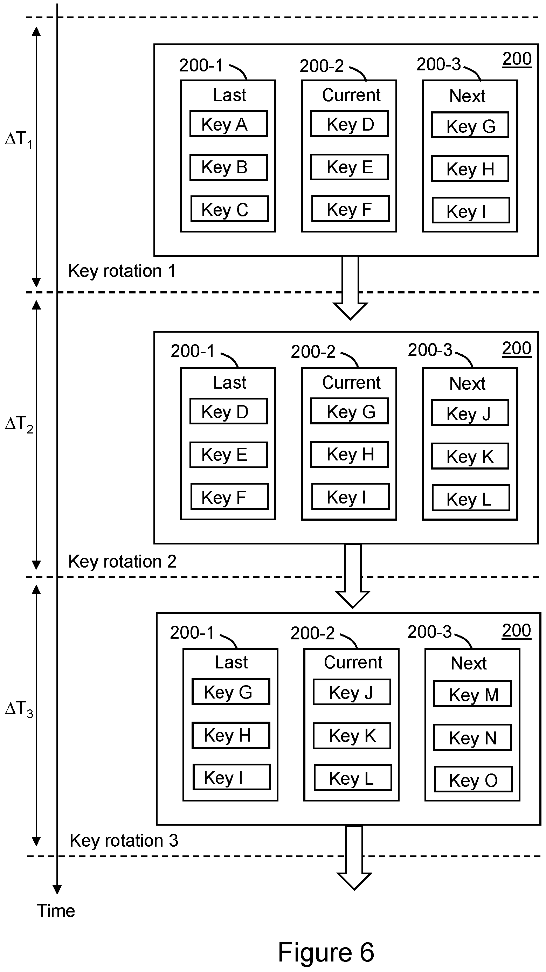

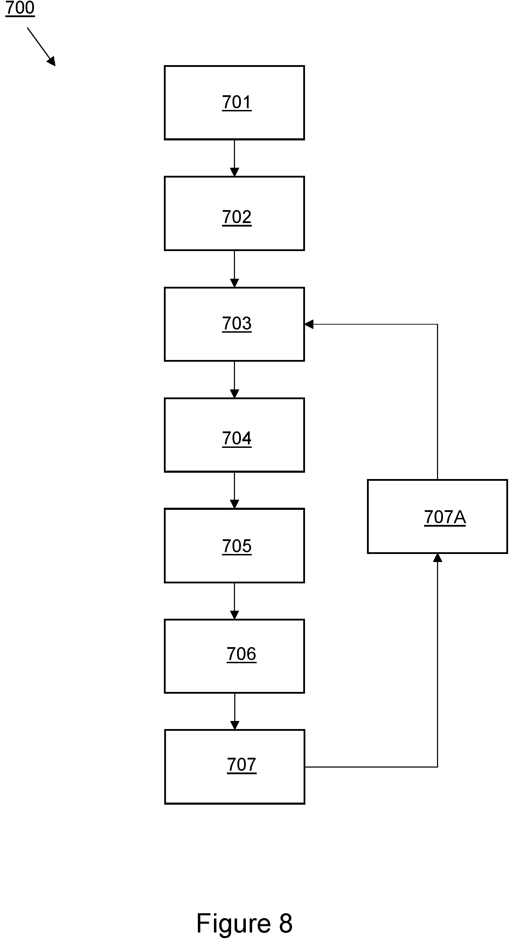

Figure 5 shows a schematic diagram of a method 500 of token key management involving periodic key rotation using the key set 200 according to the present disclosure. Figure 6 shows a corresponding schematic diagram illustrating the method 500. The method 500 comprises maintaining a key set 200 including a plurality of subsets of one or more keys corresponding to a plurality of respective temporally contiguous token signing periods including a current token signing period and a past and/or future token signing period. In an example implementation, the maintaining the key set 200 includes steps 501 to 503. Step 501 involves storing, at a token server 106, a key set 200 including: a first key subset 200-1 of keys (key pairs) associated with a last token signing period; a second key subset 200-2 of keys (key pairs) associated with a current token signing period; and a third key subset 200-3 of keys (key pairs) associated with a next token signing period. The storing step 501 preferably involves storing in short-term memory, e.g. loaded in a cache 128, and not storing or writing to persistent memory. The key set 200 held in memory represents the current key set 200 in use by the token server 106. Step 502 involves publishing or providing the public part of the keys of the keyset 200 (including those from the first, second and third key subsets 200-1 to 200-3) to a validating entity, such as a client 102 or resource server 108. The public part of the keys may be provided periodically (e.g. at the start of each token signing period), or in response to a request from the validator. Step 503 involves periodically updating the key set by performing a key rotation operation or sequence, whereby the key pairs of the first key subset 200-1 are removed from use; the key pairs of the second key subset 200-2 are assigned (re-assigned or moved) to the first key subset 200-1; the key pairs of the third key subset 200-3 are assigned (re-assigned or moved) to the second key subset 200-2; and a new set of key pairs is assigned to the third key subset 200-3. The key rotation operation is preferably performed periodically, at the end of each current token signing period. This key rotation operation in step 503 may involve retrieving an updated or the latest key set 200 from a secure database 310 storing the keys, preferably in response to receiving a key event notification indicating the presence of the one or more new keys, which replaces the previous key set 200 stored or held in memory at the token server 106, as will be described in more detail below with reference to Figure 8.

Each key subset 200-1 to 200-3 is thus rotated or updated periodically or continually, such that keys move through the three key subsets 200-1 to 200-3 over time. Generally, a key-pair starts in the third key subset 200-3 as a future set for the next token signing period, rotates to second key subset 200-2 upon a key rotation where it becomes an 'active' key for signing tokens with, and then rotates again to the first key subset 200-1 upon a further key rotation where it is no longer used for signing but is available for verifying tokens that may still exist. Figure 6 shows the key set 200 over three consecutive signing periods ΔT₁, ΔT₂, ΔT₃, with respect to time, whereby a key rotation operation is implemented periodically at the end of each current signing period ΔT, as indicated by the dashed lines. In the first signing period ΔT₁, the first key subset 200-1 includes keys A, B, C, the second key subset 200-2 includes keys D, E, F, and the third key subset 200-3 includes keys G, H, I. Upon key rotation 1: 'old' keys A, B, C are removed from the first key subset 200-1 and can no longer be used; keys D, E, F are assigned (re-assigned or moved) to the first key subset 200-1 for use in verifying tokens signed in the last signing period ΔT₁; keys G, H, I are assigned (re-assigned or moved) to the second key subset 200-1 and become the 'active' keys for the current signing period ΔT₂; and a new set of keys J, K, L are assigned to the third key subset 200-3 for use in the next signing period ΔT₃. Upon key rotation 2: keys D, E, F are removed from use; keys G, H, I are assigned (re-assigned or moved) to the first key subset 200-1 for use in verifying tokens signed in the previous signing period ΔT₂; keys J, K, L are assigned (re-assigned or moved) to the second key subset 200-1 to become the 'active' keys for the current signing period ΔT₃; and a new set of keys M, N, O is assigned to the third key subset 200-3 for use in the next signing period.

Although in the above-described examples the key set 200 includes three subsets 200-1 to 200-3 corresponding to the last, current and next token signing periods, in other examples the key set 200 may include two subsets (e.g. for the last and current token signing period), or more than three subsets (e.g. including the next two tokening signing periods) and still provide the same advantages. In this case, more generally, maintaining the key set 200 comprises periodically updating the key set 200 by performing a key set rotation operation, whereby the keys of the most temporally advanced subset of the plurality of subsets are replaced with one or more new keys, and the keys of each other subset are replaced with the keys of the respective temporally proceeding subset of the plurality of subsets.

In preferred examples, keys are rotated daily (ΔT = 1 day) to reduce security risks, and the multi-period key set 200 is particularly advantageous for implementing such short rotation periods which would ordinarily cause problems for globally distributed systems for the reasons described above. However, it will be appreciated that in general the token signing period ΔT can be shorter or longer depending on the requirements of the data provider - but is longer than the shortest lifetime of the access token(s). As such, the key set 200 is generally a sliding window of three subsets of keys which represent consecutive signing periods, such as yesterday, today and tomorrow for daily rotation. Only 'active' keys from the second subset 200-2 are used for signing tokens, such that a client 102 or validator should not receive a token signed with a private key for which the corresponding public key cannot be obtained from the endpoint, irrespective of the timing of the call/request to the endpoint and the key set 200 returned.

Key sets 200 are stored at each token server 106, and each key subset 200-1 to 200-3 is treated as a single object or atomic unit to reduce the potential for only some of the keys being available to the token servers 106. As discussed, preferably, key sets 200 are stored or loaded in memory, e.g. in cache 126, and are not stored in persistent form on the token server 106 (to improve security of the private keys). In an example implementation, key subsets 200-1 to 200-3 are stored as a (stringified) JSON object. An example format for the data bytes of a key subset is provided below, which is big endian format of a Biglnt/encoded format as base64url with no padding:

```
 {
          "keys": [
         {
          "crv": "Ed25519",
          "d": "golpjW6FrD7Ujxlo-HGLnoyM7xwPiOSyBSWMVxZJ9EU",
          "kid": "1878129e",
          "kty": "OKP",
          "x": "lkraqZUksdQCcVRkW6yp6La7KdvyG2bSHMS-Rh06pAE"
         },
         {
          "d":
 "oHsEP9PvVoAIxiWBPbAH4TiNBkEFfyOyXDN2YLLuFTw79x8oauYhT65vDhy0iKZK5dYB9QjZKzpq8uzTOk2aN9KA
 cQZORYhw37P7EMqm4oZ_E5QiludvvD4FmTTkt8N48CWtDMTtRLs
VkOB2ixr9nRQ74PNGDkgE5Dbja1EIsQNkdutr4zvaLQei0lsgF
 bg3K6bxEN6h08yRLRVG0yMC
 dfnfsV1c8tNnsS_IDcCZy2YPs1fnUfmig8Otc2-akO6Lyj3pDenvfR4z40loK1d4te4OKaq3VNizB8EopCZESoBbuMxiVI-
 XRbcWpw3J-rwxRpMoiEUYevJ76gw6xJAQ",
          "e": "AQAB",
          "kid": "921ebf14",
          "kty": "RSA",
          "n":
 "w1iAFvAsBbQOowLZmJ32fw0TssW0YVDNJiROCaFHK8shy1TS7xqb6PKHP7uLBMStNaOG7_DYsPtpxpGojNfp6ig
 YzyhVxB2kS2yk3cFdtH7GlaHeFNpiWKHYDZHs8Jhi13G44R89SclyuW3QITHfP8Lz2i-
 BajHYf3xFPaTNa4nx2BDwIOzlJteUoGnziZc9_
 qVIo2cMfKrco53krj5V_oAGQTIxbeRkTPF4ei9G_np3j4WWwTqJnqBam-
 iiqdGTOjGbrg6hffCDaGhvbDC1aAGhnoGeGxK2tLgCaU_uxQujWyvRFzPIwluI-
 TzfFSmzzxTLQOES_hs1 WrPnBMeQ",
          "p":
 "w6W8JjkjrdPpjlm7tGOeXIQE33EBqgmkrL1LSgATJQwPZaGjxzmloyJQSbFWM1gQN5Geh4hexjsPjvoYwKR30FpF
 FvU_2D1A0q63h9uXHwVRiX3dewX2PDKDvyNkLcDiSNmgR5Njtr17WHf2sLezqJSLVwjW1f7NSLq_6_N0Ww0",
          "q": "_5rwujOgXH0u3loaMLZgBrC1kocqc4zmvfzJoVGi7HPx7iJbLvUXhaN5pVUZmoCuWJIwqAFwKz2V_
 qeNYw4rLQdJoRD5acm-
 Sizxl6GrNj0el_WAmX1JJVnoLyWLc-eGEK005vcYDh6aaHb1Dfd13sqz7bigwIGXp9bWwMa7B0"
         },
         // e,g https://github.com/lestrrat-go/jwx/blob/develop/v2/jwk/rsa.go
         ]
 }
```

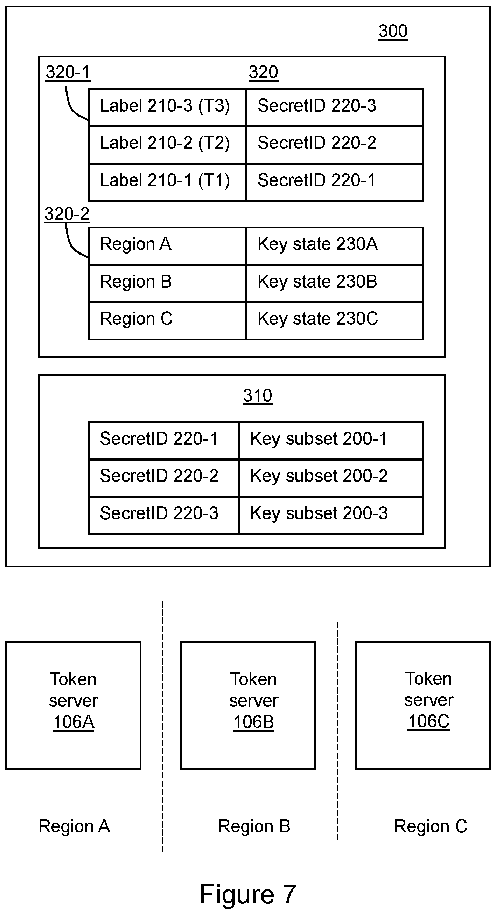

Each key subset 200-1 to 200-3 has a key name or label 210 including a standard prefix and a timestamp associated with a creation time, e.g. in the format of and KEY#$epoch_seconds#, to enable a sorted order to be applied for managing key rotation (discussed in more detail below with reference to Figure 7). Further, each individual key of a subset has a key ID which can be included in the signed token (e.g. in the 'kid' claim, as shown in the above example and is known in the art) in order to identify the corresponding public key needed to verify it. The key ID is preferably an alphanumeric code, which may, for example, be a hash of the key itself, or a cyclic redundance check (CRC) code as a hexadecimal. In cases where consuming services have limited key-space which is not able to support long key IDs, the use of a CRC code, such as 32-bit CRC code with known generator polynomial, is preferable over a hash of the key due to the shorter key ID. Such a CRC32 code can be generated using the known generator polynomial (e.g. the standard IEEE 0xedb88320 polynomial) and the data bytes of the individual public key as the data string. It will be appreciated that the key IDs need only be unique over three consecutive token signing periods for as many keys are in the key set 200.

In a globally distributed system 100, the key sets 200 should be the same in each token server 106 in each geographic region. Accordingly, in preferred embodiments, a remote secure database system 300 is used as a single source of truth for the key set state in each region which each token server 106 checks upon a key rotation. In this way, each token server 106 in each region is in agreement as to which key set 200 is available in region before a key rotation occurs, as described in more detail below.

Figure 7 is a schematic block diagram showing an exemplary architecture for managing key rotation in a geographically distributed system. In particular, Figure 7 shows multiple 'regional' token servers 106 in different respective geographical regions: token server 106A in geographic region A (e.g., the United States); token server 106B in geographic region B (e.g., the European Union); and token server 106C in geographic region C (e.g., Asia-Pacific), with the different geographical regions A, B, C being separated by the dashed line. Each regional token server 106A has access to, and is in communication with, a database system 300 over a network to enable the retrieval of keys sets 200 and exchange of data at each token signing period, as will be described in more detail below. Each regional token server 106A to 106C may be a group of token servers 106, as described above with reference to Figure 2. Alternatively, it will be appreciated that the below description also applies to multiple token servers 106 in the same region.

The database system 300 includes a first database 310 storing the key subsets 200-1 to 200-3 in association with respective identifiers 220-1 to 220-3, and a second database 320 storing (e.g. in a table 320-1) the timestamped labels/names 210-1 to 210-3 for each key subset 200-1 to 200-3 in association with their respective identifiers 220-1 to 220-3. With this architecture, during each key rotation, regional token servers 106A to 106C can query the second database 320 to read the last three entries by timestamp of the labels 200-1 to 200-3, and then retrieve the corresponding key subsets 200-1 to 200-3 from the first database 310 using the Secret IDs 220-1 to 220-3 associated with the labels 200-1 to 200-3.

The first database 310 is a secure database for storing and managing sensitive data such as cryptographic keys, and may be referred to in the art as a 'Secret Manager' or 'Secrets Manager'. As such, the identifiers 220-1 to 220-3 can be referred to as `Secret IDs'. In preferred implementations, the database system 300 is multi-region or global database system that supports global accessibility and scalability, as is known in the art. Such a global database may be `serverless' and/or provided or maintained by one or more third party service providers, as is known in the art. More preferably, the database system 300 supports or enables global replication for improved latency and availability, meaning that changes to the databases 310, 320 applied locally in one region (e.g. to a local/primary portion or version of the database) are replicated/propagated globally (automatically) to all other regions (e.g. to all readable secondary portions or versions of the database). In a preferred example, the second database 320 is implemented as a NoSQL database, such as DynamoDB provided by Amazon Web Services (AWS), and the first database 310 is implemented in AWS Secrets Manager. In this example, the table 320-1 is a DynamoDB global table. Both AWS Secrets Manager and DynamoDB global tables provide for global replication of locally written data and allow servers (such as the token servers 106A to 106C) to read globally available data. However, it will be appreciated that other suitable database systems (which may be managed by other cloud service providers) that provide for global availability and global replication to preserve availability/resilience can be used instead. In some examples, the second database 320 may instead be an SQL or relational database.

Figure 8 shows a schematic diagram of a key set update or key rotation operation in more detail. Method 700 may correspond to step 503 of Figure 5 and be part of method 500. In step 701, a new set of one or more new keys (key-pairs) for the third key subset 200-3 (i.e. for the next token signing period) is generated and stored in the first database 310 along with an associated Secret ID 220-3 for identifying the key subset 200-3 in the first database 310. Key generation may involve: generating one or more new keys in memory of the required type (e.g. using Rivet-Shamir-Adleman (RSA) or Edwards-curve digital signature (ed25519) public-key encryption algorithms); hashing the serialised form of the keys to be used a future reference; encrypting the serialised form of the keys (e.g. using a third party encryption service such as AWS Key Management Service); and storing the hash and encrypted values as the 'Secret' in the first database 310 in association with a 'Secret ID' 220-3 for that entry.

In step 702, a key subset label 210-3 (which includes a timestamp associated with the creation time) is stored in the second database 320 in association with the Secret ID 220-3. This may involve writing a new row entry into the table 320-1. Preferably, where the database system 300 is serverless, the new entry in the first database 310 is globally replicated within the first database 310, and step 702 is performed after confirmation of global replication is received from the first database 310 (and the new row entry in the second database table 320-1 is then also replicated globally to all regions). Steps 701 and 702 can be performed using a program or script implemented on one of the token servers 106A to 106C or another server (e.g. as a scheduled server task or job), but is preferably performed using one or more 'serverless' functions implemented in a highly available computing infrastructure such as AWS Lambda, which is executed or run periodically, e.g. at the end of the current token signing period.

Steps 703 to 705 involve retrieving an updated key set comprising the one or more new keys in response to receiving a key event notification indicating the presence of the one or more new keys; and replacing the key set with the updated key set. Specifically, in step 703, the token servers 106A to 106C receive a key event notification from the second database 320 indicating that a change or update has occurred in the database 320. For example, where the second database system 320 is implemented in AWS DynamoDB, updates to the database tables are streamed to the subscriber (i.e. the token servers 106A to 106C) as a time-ordered sequence of item level events using Dynamo Streams. This notification informs the token servers 106A to 106C of a new key event which has taken place, and that a key rotation is required.

The updated key set is preferably retrieved from the first database 310 based on a time stamp associated with each respective subset of keys of the updated key set stored in the first database 310. This may involve identifying the most recent plurality of subsets of keys stored in the first database 310 based on their associated time stamps, as described in more detail below.

In step 704, in response to receiving the key event notification, each token server 106A to 106C queries the second database 320 to read the most recent, in this example the last three, entries or items by timestamp of the labels 200-1 to 200-3.

In step 705, each token server 106A to 106C then retrieves the corresponding key subsets 200-1 to 200-3 from the first database 310 using the Secret IDs 220-1 to 220-3 associated with the labels 210-1 to 210-3. The retrieved key set 200 is then stored at the respective token server 106A to 106C (preferably in a respective memory cache 126, as discussed above). It will be appreciated that the token servers 106A to 106C do not need to know (e.g., from the key event notification or otherwise) if there is a new key subset or not, only that it needs to re-load the three key subsets 200-1 to 200-3 from the first database 310 based on the labels 210-1 to 210-3 retrieved from the second database 320.

Steps 706 and 707 involve monitoring the key set 220 at each token server 106A to 106C, and causing, if the key sets 200 at the respective token servers do not match within a predefined time period following a key set update, each token server to: retrieve the updated key set from the first database 310 again; and replace the previous key set with the retrieved updated key set.

In step 706, each token server 106A to 106C sends a notification to the second database 320 containing information 230A, 230B, 230C indicating the state of the key set 200 stored at the respective token server. This information 230A, 230B, 230C may represent a 'lease' of the key subset. In one example, this state or lease information 230A, 230B, 230C includes, for each key subset 200-1 to 200-3, the key subset label 210-1 to 210-3 and a hash of the keys. Preferably, a record 320-2 of the state 230A to 230C of the key set 200 stored (and thus in use) at each token server 106A to 106C is stored in the second database 320, e.g. in a separate table (see Figure 6), and the notifications sent in step 706 cause the record 320-2 to be generated, or an existing record 320-2 updated, to reflect the current key states in the token servers 106A to 106C across the different regions.

In step 707, the state 230A to 230C of the key sets 200 at each token server 106A to 106C is monitored for convergence. If the respective key state information 230A to 230C for each key subset 200-1 to 200-3 from all the token servers 106A to 106C converges or matches within a predefined period of time, such as 1 to 5 minutes, the key rotation sequence finishes. Alternatively, if the respective key state information 230A to 230C for each key subset 200-1 to 200-3 from all the token servers 106A to 106C does not converge or match within the predefined period of time (e.g., because of a replication fail, due to a down event in a region) a key reload operation is initiated in step 707A, which causes the token servers 106A to 106C to retrieve again the key subsets 200-1 to 200-3 from the first database 310 using the Secret IDs 220-1 to 220-3 associated with the labels 210-1 to 210-3. In preferred implementations, this is achieved by updating the key subset label 210-1 to 230-3 of one or more of the last three entries in the second database 320, which causes the generation of a new key event notification (e.g. in the Dynamo Stream) and the repetition of steps 703 to 707, thereby causing all regions to re-load the key subsets 200-1 to 200-3, as indicated by arrow in Figure 7. In one example, the timestamp of the key subset label 210-3 of just the last entry/row in the second database 320 (corresponding to the more recent key subset 200-3) is updated, e.g. to the current time, to avoid altering the temporal order of the key subsets. However, it will be appreciated that in general, any change to the second database 320 which causes the generation of a new key event notification (without changing the Secret IDs 220-1 to 220-3) can be used. In an alternative example, a notification can be sent from the second database 320 to any individual token server(s) 106 for which the key rotation was not successful to cause the individual token server(s) 106 to re-load the key subsets 200-1 to 200-3. Optionally, a notification or alert can be generated (e.g. by the key rotation sequence program or serverless function(s)) indicating the success or failure of the convergence. The alert can be provided to one or more of the token servers or a token service operator for future reference or for implementing any remedial actions.

The multi-period key set 200 and key rotation sequence 700 described above provides a grace period of one token signing period (e.g. one day) to rectify any operational issues which may result in failure of the key rotation across all token servers 106A to 106C. A failure of global replication in the first database 310 (e.g. AWS Secrets Manager) will not affect the system 100 as no new key set 200 will be retrieved by the token servers 106A to 106C and published. Further, a failure of global replication in the second database 320 (e.g. AWS DynamoDB global tables) has a time period of 1 rotation period to be resolved (e.g. one day). Given that the global propagation of updates across the databases 310, 320 occurs within a short time period, typically a few minutes, there is sufficient time to repeat the key rotation sequence (step 708) and implement any remedial actions as needed.

### Token sets

As previously discussed, refresh tokens allow clients to request new access tokens repeatedly to allow the client to have continued access to resources on the resource server. Modern applications often require multiple tokens to control different aspects of behaviour or have different scope and security restrictions at different endpoints, which requires different resource access tokens. One problem associated with the existing method is the requirement for vast numbers of refresh tokens corresponding to the various different resource access tokens. This produces a large load on the servers as the number of refresh tokens is proportional to the number of clients multiplied by the number of tokens and the refresh period. Furthermore, modern applications often require that a group of individual tokens are treated as a single group for deletion, or expiry. This is extremely challenging to do atomically with many separate tokens all controlled individually.

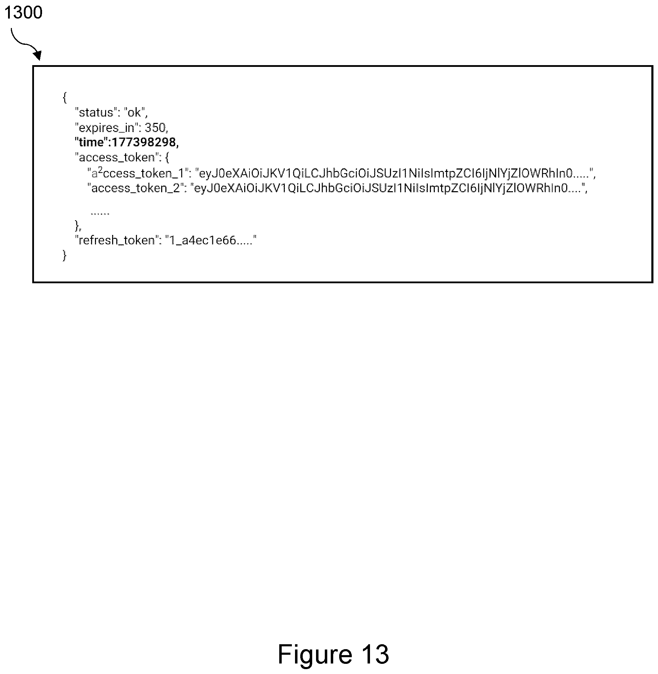

To solve these problems, the methods described herein group access tokens for a given application into sets and assign a bespoke refresh token to each set. The bespoke refresh token does not require that all tokens in a set have the same behaviour. An example bespoke refresh token is shown in Figure 13. Figure 13 is described in more detail with reference to step 928. The access tokens may be grouped in sets where each set of access tokens has one corresponding refresh token. For example, the access tokens may be grouped into sets defined by a user. In such cases, each set may correspond to a given user of a client 102. In other examples, the access tokens may be grouped into sets defined by a client. In such cases, each set may correspond to an entire client. In these cases, only one refresh token may be required for a given client.

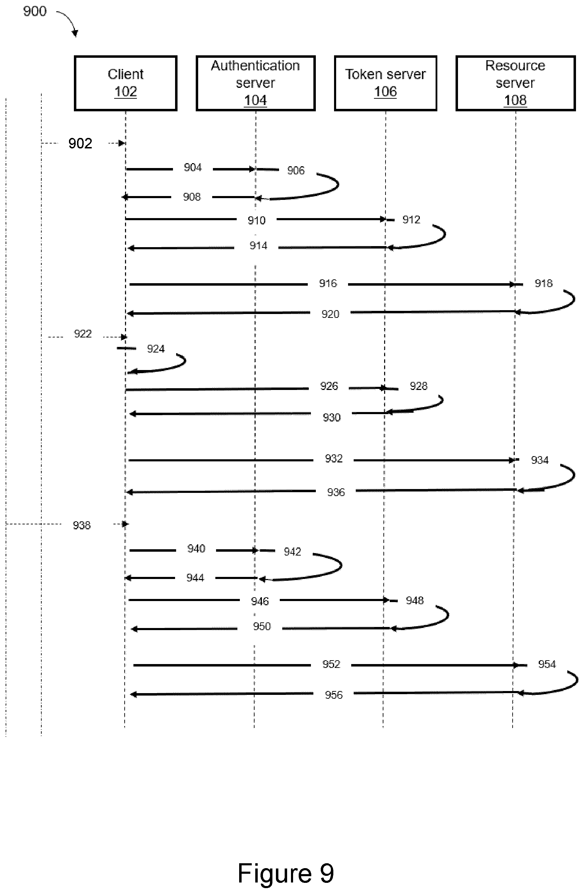

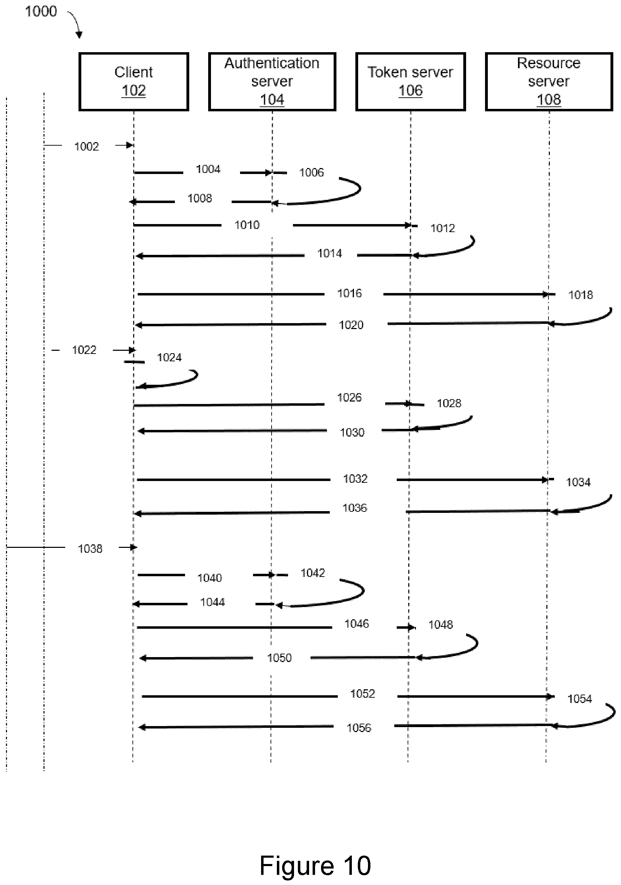

Figures 9 and 10 show flow diagrams for a method 900, 1000 of providing access of a resource to a client 102 by grouping access tokens into sets. Methods 900 and 1000 pertain to user-defined and client-defined sets, respectively. It will of course be appreciated that the sets can also be defined by other parameters, for example, access time or access type. Methods 900 and 1000 may be performed, for example, by the architecture set out in either of Figures 1 or 2.

### Token sets: user defined - setting up access.

Figure 9 shows a flow diagram of a method 900 whereby the token sets are user-defined. In such cases, the definition of the set criteria is defined within the token server 106. The set criterion in method 900 is that each set corresponds to a different IdP (identification token identifying a user of the client 102).

In step 902, a first user of a client 102 attempts to access a resource on a resource server 106. This action generates a resource request corresponding to the first user in the client 102. The first user provides their login credentials to the client 102, for example by entering a username and password into a web browser.

In step 904, the client 102 passes the login credentials to - an authentication server 104 in data flow 110. The authentication server 104 may, for example, provide a Microsoft Entra^{®} tenant associated with an organisation to which the user of the client 102 belongs, as described previously.

In step 906, the authentication server 104 verifies the identity of the user via their login credentials. Having verified the identity of the first user via their login credentials, the authentication server 104 generates an IdP access token. The authentication server 104 then issues the IdP access token back to the client 102 in step 908. The IdP token defines the identity of the first user, and is digitally signed by the issuer (in this case the authentication server 104), using public-key cryptography, to establish the authenticity of the IdP access token.

In step 910, the client 102 then sends the resource request received from the user and the IdP access token received from the authentication server 104 to a token server 106. The token server 106 is operated by the data provider which provides the data stored on the resource server 108 that the user is attempting to access.

The token server 106 verifies the signature of the IdP access token in step 912 and generates a resource access token corresponding to the resource request and a refresh token corresponding to the IdP and the resource access token. The refresh token comprises data representative of an expiry time of the resource access token. Preferably, the data representative of an expiry time of the resource access token may be a pointer to the resource access token. In other examples, the data indicative of an expiry time of the resource access token may be a time of expiry. It is understood that any appropriate data indicative of the expiry time of the resource access token could be used in the refresh token corresponding to the resource access token but that the methods described herein are described in relation to example embodiments.

In step 914 the resource access token and the refresh token are issued back to the client 102. The resource access token defines the resource access permissions granted to the user and is itself again digitally signed by the data provider as the issuer of the token, again using public-key cryptography, to establish the authenticity of the resource access token.

The client 102 then submits the resource access token to the resource server 108 in step 916. In step 918, the resource server 108 verifies the signature of the resource access token and transmits the corresponding resource (data) back to the client 102 in step 920. Verification of the resource access token involves using a public key corresponding to the private key used to sign the token, as described previously.

In step 922, the first user attempts to access a second resource provided by or accessible via the resource server 108, which generates a second resource request at the client 102.

In step 924, the client 102 verifies that the first user has been authenticated at authentication server 104, and in step 926 sends the resource request for the second resource, the IdP and the refresh token corresponding to the first user to the token server 106. Alternatively, when a second resource is accessed by a verified user, the resource request need not require the IdP.

In step 928, the token server 106 verifies the signature of the IdP access token and generates a resource access token for the second resource. The token server 106 adds the data indicative of an expiry time (in this example, a pointer to the second resource access token) of the second resource access token to the refresh token corresponding to the first user. Figure 13 shows an example refresh token with a plurality of pointers to access tokens. Step 928 may comprise modifying the refresh token by adding a pointer to an access token to a set of pointers to access tokens. In step 930 the resource access token and refresh token are issued back to the client 102. The client 102 then submits the resource access token to the resource server 108 in step 932. In step 934, the resource server 108 verifies the signature of the resource access token and transmits the corresponding resource back to the client 102 in step 936.

In step 938, a second user attempts to access a resource on the resource server 108. This action generates a resource request corresponding to the second user in the client 102. The client 102 determines that this user has not yet provided their login details and the second user provides their login credentials to the client 102, for example by entering a username and password into a web browser. In step 930, the client 102 passes the login credentials to the authentication server 104 in data flows 110.

In step 940, the authentication server 104 verifies the identity of the user via their login credentials.

Having verified the identity of the first user via their login credentials, in step 942, the authentication server 104 generates an IdP access token corresponding to the second user and issues the IdP access token back to the client 102 in step 944.

In step 946, the client 102 then sends the resource request received from the user and the IdP access token received from the authentication server 104 to the token server 106. The token server 106 verifies the signature of the IdP access token in step 948 and generates a resource access token corresponding to the resource request and a refresh token corresponding to the IdP of the second user. In step 950, the resource access token and refresh token are issued back to the client 102. The resource access token defines the resource access permissions granted to the user and is itself again digitally signed by the data provider as the issuer of the token, again using public-key cryptography, to establish the authenticity of the resource access token. The result of steps 902 to 950 is the generation of two sets, each with a corresponding refresh token and each corresponding to a different user.

The client 102 then submits the resource access token to the resource server 108 in step 952. In step 954, the resource server 108 verifies the signature of the resource token and transmits the corresponding resource back to the client in step 956.

For each subsequent resource accessed by either the first or second user within the global access time defined in their respective refresh request, the client 102 sends a refresh token corresponding to the user (since the sets are user-defined) to the token server 106 to obtain access.

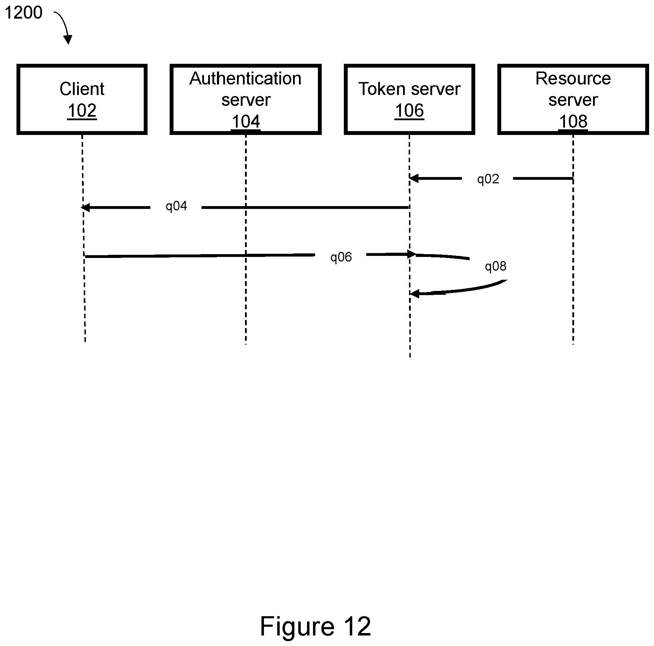

In some examples, a user may be timed out of the client server 106. In such cases, there is a need to revoke the access granted to the user. This is described in more detail below with reference to Figure 12.

In a preferred embodiment, as described above with reference to Figure 9, resource access tokens are grouped into user-defined token sets, where each token set comprises resource requests pertaining to a given user. Each token set further comprises a refresh token corresponding to the user.

It is, however, understood that token sets can be defined in a plurality of other appropriate ways, achieving a variation on the technical effect.

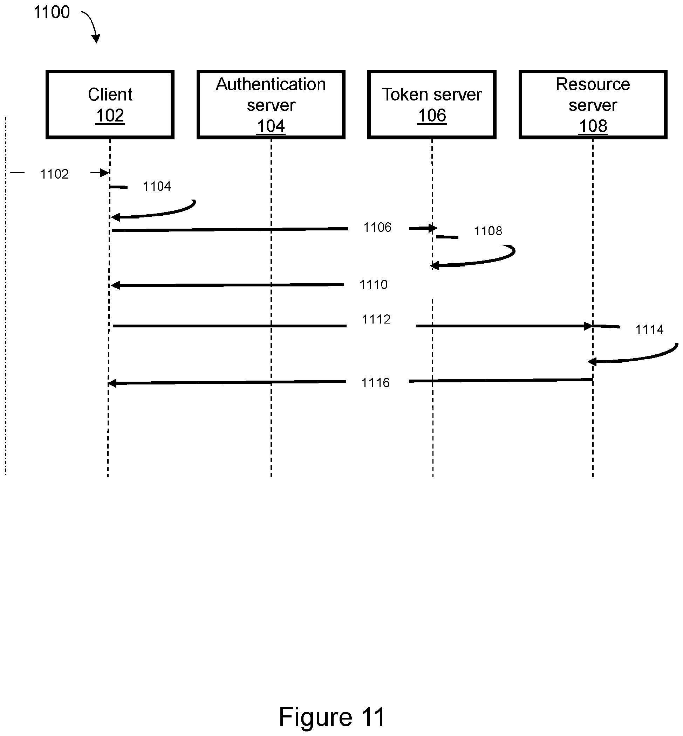

Steps 918 to 926 can be repeated any number of times provided the resource request defines a new resource not yet accessed by the user and the user is deemed to have access privileges to the resource. Resource requests for existing resources are handled differently. This process is described below with reference to Figure 11.

### Token sets: client defined - setting up access.

Figure 10 shows a flow diagram of a method 1000 whereby the token sets are client-defined. In such cases, each set may correspond to an entire client. In these cases, only one refresh token may be required for a given client. In step 1002, a first user of a client 102 attempts to access a resource on a resource server 108. This action generates a resource request corresponding to the first user in the client 102. The first user provides their login credentials to the client 102, for example by entering a username and password into a web browser.

In step 1004, the client 102 passes the login credentials to an authentication server 104 in data flow 110. The authentication server 104 may, for example, provide a Microsoft Entra^{®} tenant associated with an organisation to which the user of the client 102 belongs.

In step 1006, the authentication server 104 verifies the identity of the user via their login credentials. Having verified the identity of the first user via their login credentials, the authentication server 104 generates an IdP access token. The authentication server 104 issues the IdP access token back to the client 102 in step 1008. The IdP access token defines the identity of the first user, and is digitally signed by the issuer, using public-key cryptography, to establish the authenticity of the IdP access token.

In step 1010, the client 102 then sends the resource request received from the user and the IdP access token received from the authentication server 104 to a token server 106. The token server 106 is operated by the data provider which provides the data stored on the resource server 108 that the user is attempting to access.

The token server 106 verifies the signature of the IdP token in step 1012 (using a corresponding public key for the token signature) and generates a resource access corresponding to the resource request and a global client refresh token corresponding to the client.

In step 1014 the resource access token and the global client refresh token are issued back to the client 102. The resource access token defines the resource access permissions granted to the user and is itself again digitally signed by the data provider as the issuer of the token, again using public-key cryptography, to establish the authenticity of the resource access token.

The client 102 then submits the resource access token to the resource server 108 in step 1016. In step 1018, the resource server 108 verifies the signature of the resource access token and transmits the corresponding resource back to the client 102 in step 1020.

In step 1022, the first user attempts to access a second resource, generating a second resource request at the client 102.

In step 1024, the client 102 verifies that the first user has been authenticated at the authentication server 104, and in step m26 sends the resource request for the second resource, the IdP and the global client refresh token corresponding to the client 102.

In step 1028, the token server 106 verifies the signature of the IdP token and generates a resource access token for resource 2. The token server 106 adds the data indicative of an expiry time of the second resource access token to the global client refresh token. In step 1030 the resource access token and global client refresh token are issued back to the client 102. The client 102 then submits the resource access token to the resource server 108 in step 1032. In step 1034, the resource server 108 verifies the signature of the resource access token and transmits the corresponding resource back to the client 102 in step 1036.

In step 1038, a second user attempts to access a resource on the resource server 108. This action generates a resource request corresponding to the second user in the client 102. The client 102 determines that this user has not yet provided their login details and the second user provides their login credentials to the client 102, for example by entering a username and password into a web browser. In step 1030, the client 102 passes the login credentials to the authentication server 104 in data flow 110.

In step 1040, the authentication server 104 verifies the identity of the user via their login credentials.

Having verified the identity of the first user via their login credentials, in step 1042 the authentication server 104 generates an IdP access token corresponding to the second user and issues the IdP access token back to the client 102 in step 1044.

In step 1046, the client 102 then sends the resource request received from the user and the IdP access token received from the authentication server 104 and the global client refresh token to the token server 106. The token server 106 verifies the signature of the IdP access token in step 1048 and then generates a resource access token corresponding to the resource request and adds the expiry times to the global client refresh token. In step 1050, the resource access token and global client refresh token are issued back to the client 102.

The client 102 then submits the resource access token to the resource server 108 in step 1052. In step 1054, the resource server 108 verifies the signature of the resource access token and transmits the corresponding resource back to the client 102 in step 1056.

For each subsequent resource accessed by either the first or second user within the global access time defined the global client refresh request, the client 102 sends the global client refresh token to the token server 106 to obtain access. The result of method 1000 is that a set of access tokens corresponding to the client 102 is generated and managed by one refresh token corresponding to the set.

Steps 1018 to 1026 can be repeated any number of times provided the resource request defines a new resource not yet accessed by the client 102, and the client 102 is deemed to have access privileges to the resource. Resource requests for existing resources are handled differently. This process is described in more detail below with reference to Figure 11.

### Refreshing tokens in a set (regardless of set definition)

As previously discussed, the resource access tokens act as bearer tokens, in the sense that they grant access to the client 102 bearing the token. For security reasons, the resource access tokens are time limited so that the access granted to the client 102 is effectively revoked upon expiry of the access token.

A typical lifetime for the resource access tokens is about 5 minutes. Longer lifetimes for the resource access tokens can be implemented (such as up to 24 hours), but for the most secure applications a short lifetime is preferable.

As discussed above with reference to Figures 9 and 10, a given refresh token corresponds to a set of access tokens. Refresh tokens may have an unlimited expiry time, or at least a longer expiry time than the resource access tokens (e.g., 18 hours). To obtain a new access token, the client 102 sends (a copy of) the refresh token corresponding to the token set which holds the resource access token the client 102 is trying to refresh to the token server 106 while it holds a valid resource access token (i.e., before the current resource access token it holds has expired).

Figure 11 is a flow diagram for a method 1100 of refreshing a resource access token to a previously accessed resource using a refresh token. Figure 11 uses an example of user-defined sets (described with reference to Figure 9), but it is of course understood that the method 1100 can also be applied to sets defined using another parameter.

In step 1102, a user tries to access a resource they have previously accessed via the client 102, thus generating a resource request. In step 1104, the client 102 determines whether the resource has been previously accessed by the user.

In response to a determination that the resource has been previously accessed, in step 1106 the client 102 sends the refresh token corresponding to the resource access token and the IdP of the user to the token server 106.

In step 1108, at least the resource access token corresponding to the resource request is refreshed. Preferably, the entire set of resource access tokens is refreshed as a single group on each refresh call, rather than individually. This function allows the use of a single refresh token to act as the control token for the entire set, instead of multiple tokens per end resource. This greatly simplifies managing related tokens that the client uses individually across individual resource servers. Furthermore, the individual access tokens can have different lifetimes, expiry and other restrictions within the same set.

In step 1110, token server 106 provides at least the resource access token corresponding to the resource request and the refresh token. In examples where all the resource access tokens in the set are refreshed, the entire set of refreshed resource access tokens is passed back to the client 102. The client 102 then submits the resource access token to the resource server 108 in step 1112. In step 1114, the resource server 108 verifies the signature of the resource access token and transmits the corresponding resource back to the client 102 in step 1116.

Beneficially, the methods 900, 1000, 1100 described herein in relation to Figures 9, 10 and 11 greatly reduce the number of client-server network calls to 1 per token set, rather than 1 per resource access token. The methods described herein provide for tokens in the same logical group or set that can have different behaviours, without a single token having to carry a superset of all scopes, or information, thus greatly reducing the problem of over-privileged single tokens.

Preferably, the entire resource access token set is encoded in the refresh token, so that the entire token set can be recreated and managed from the refresh token itself.

In some examples, a further extension of the token set functionality is provided in the form of "step up" or "step down" actions (where the access permissions granted to a user as altered up or down - for example, by exchanging a lower-level permission token (such as a "data token" type, as described above) for a higher-level permission token (such as a "restricted token" type, as described above)This enables the client 102 to control the token set it needs at a more granular level, without needing to alter every token in the set to add and remove access or level of access using the above infrastructure.

### Revoking tokens in a set (regardless of set definition)

As discussed above, there may be cases where there is a requirement to revoke access for an entire token set. For example, a user may be timed out of the client server 106. In such cases, there is a need to revoke the access granted to the user. In another example, where token sets are client-defined, a client 102 may have neglected to pay a renewal fee and therefore access for an entire client 102 may need to be revoked. The bespoke refresh token allows the set to be cancelled or altered as a single atomic action, rather than coordinating multiple tokens.

Figure 12 shows a flow diagram of a method 1200 for revoking all access of resources in a user-defined token set. In step 1202, the token server 106 receives a revocation request comprising a user to be revoked from the resource server 108. In step 1204, the token server 106 requests the refresh token corresponding to the user from the client 102, and in step 1206 the token server 106 receives the refresh token from client 102. In step 1208, the token server 106 revokes access to the user using the refresh token. In some examples, all access (the entire set) to resources is revoked. In such examples, the refresh token may be deleted or wiped. In other examples, partial access may be revoked. In such examples the data indicative of the relevant resources (such as pointers to the corresponding access tokens) may be deleted from the refresh token to partially revoke access.

Alternatively, the revocation request could originate at the client 102. In such cases, the revocation request to the token server 106 comprises the corresponding refresh token to revoke. The token server 106 then revokes access to the user using the refresh token as above. Again, the use of one refresh token to control access for a set of access tokens means that the number of network calls for revocation are reduced to 1 per set, rather than 1 per access token.

### Client clock drift

In distributed authorisation systems, including geographically distributed systems, such as the system shown in Figure 2, each server maintains a time by reference to a network time protocol. While a network time protocol can typically maintain time synchronisation between computers/servers to within tens of milliseconds, network delays can cause clock drifts between computers/servers, particularly between computers/servers located in different geographical regions.

One problem associated with clock drifts between servers is data inconsistency, whereby different instances of the same data entry in two different locations are not the same. This can happen if the clocks of different servers drift from one another, such that according to a first server's clock a first instance of the data was written last (and is therefore the valid instance) while according to a second server's clock a second instance of the data (which does not match first instance of the data) was written last. For this reason, different servers can infer incorrectly that different (and inconsistent) instances of data are valid.

In the context of distributed authorisation systems, such as the system shown in Figure 2, when a user is attempting, via a client device 102, to access a resource on a resource server 108, the token servers 106 which control the process of authorising the user to access the resource must store various data throughout the token exchange process. In particular, when a user is first authenticated and exchanges an IdP access token for a resource access token (as described above with reference to Figures 1 and 2), the token server 106 stores a root token which acts as a root for that login session. This may include storing data specific to the user, such as an identifier relating to the user from the identify provider (which authenticated the user) or user attributes. This data is stored so that it can be used to carry out various actions in relation to a user, including, but not limited to: token exchanges (i.e., exchanging one token for another); token validation (i.e., validating the details of a token received from a client device 102); token refresh (i.e., issuing a 'fresh' resource access token to the client 102 before expiry of an existing resource access token); logouts (i.e., an action involving the user logging out of their session); and "step up" or "step down" actions (where the access permissions granted to a user are altered up or down - for example, by exchanging a lower-level permission token (such as a "data token" type, as described above) for a higher-level permission token (such as a "restricted token" type, as described above). Therefore, in the authorisation system 100 of the present disclosure, it is important to ensure that each token server 106 in the system 100 can determine whether the data it stores in relation to a user is valid (i.e., has not been moved, altered, or superseded by a more recent event) and can therefore be used to carry out such actions for the user.

Tokens are often valid only for short time periods and must be refreshed while they remain valid. Clock drift can lead to clients submitting invalid tokens to a server, or discarding valid tokens, because time calculations differ between the server and client. The existing available infrastructure in JWTs often makes use of expiry times and `issued at' timestamps to determine whether the data stored by, for example, a client is valid, and/or must be actioned, or if a token has expired. These existing methods do not account for clock drift of a client computer from the token server time. Therefore, judging the expiry times using existing methods often leads to spurious submission of *a priori* invalid tokens by clients, or discarding of valid tokens, as the time calculations are significantly different on the server and client.

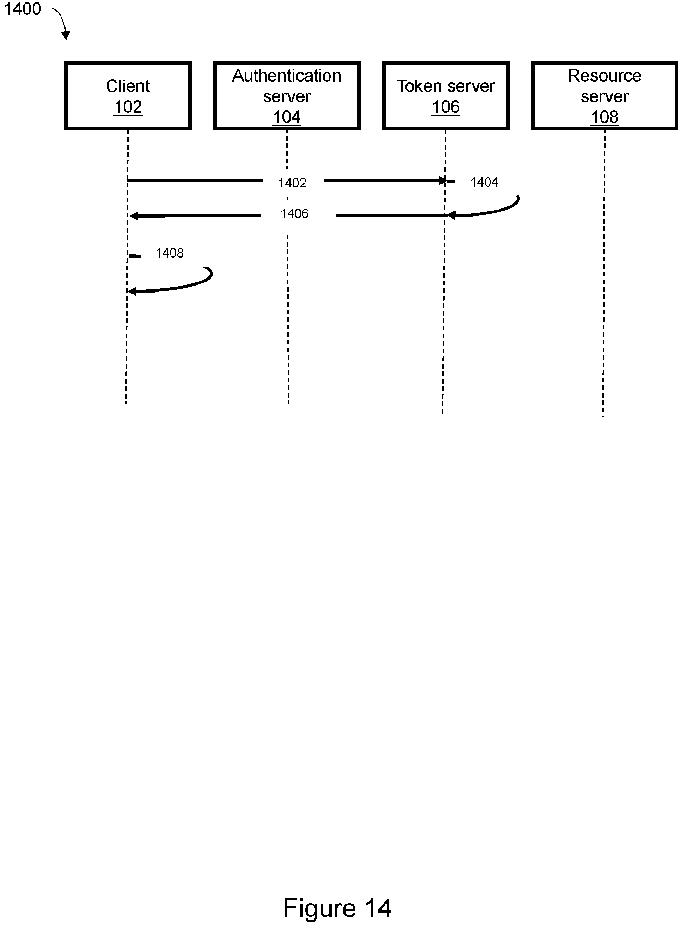

Figure 14 is a flow diagram of a method 1400 for synchronising a clock of a client server 106. Of course, in practice, the synchronisation method 1400 described herein could be applied to the synchronisation of any server type within the system to a time of a designated time authority server.

In step 1402, a client 102 sends an access request to a token server 106. In a preferred example, the token server 106 is the designated time authority server, meaning that the token server 106 time is the reference time. Beneficially, using the token server 106 as the designated time authority server can minimise submission and transmission of invalid tokens throughout the system 100. The access request comprises an indication of the resource to be accessed, an IdP of the client 102 accessing the resource, and optionally a refresh token as described previously.

In step 1404, the token server 106 performs any standard steps (described with reference to Figures 1 and 2) for responding to the access request and additionally populates a bespoke time field (as shown in Figure 13) in the token to be issued to the client 102 by the token sever 106. Populating the bespoke time field may comprise inserting into the token (e.g., in the resource access token) the current time of the token server 106. This information can then be used to determine the chronology of different actions taken in relation to the user, and therefore the validity of data relating to a user or relating to the tokens issued to a user.

For example, if, in step 1406, the token server 106 issues a refresh token and resource token back to the client 102, the refresh token response issued by the token server 106 is a bespoke refresh token response comprising a populated time field. Figure 13 shows an example refresh token response in which the time field is shown in bold.

In step 1408, the client 102 determines, based on the populated time field, a difference in the client clock from the authority (token server) clock, preferably by assuming that the time taken for the token to be sent between servers is zero. The client 102 adjusts the client server clock based on the determined time difference (between the client's local clock, and the authority clock). Beneficially, this means, irrespective of the server and client time, a common reference time can always be calculated. For example, the client may apply a time offset to its local clock time which corresponds to the determined difference, and account for the offset when determining the validity of the tokens it holds.

Steps 1402 to 1408 may be repeated a plurality of times with the token server 106 populating the bespoke time field with the token server time each time it issues a token to the client 102. In some examples, the client 102 updates the client clock regardless of the determined time difference on every refresh response to enable the clock drift to be continually updated on the client, to compensate for its own clock deviation, if required. In other examples, the client 102 updates the client clock only if a threshold difference is exceeded.

In preferred examples, the time for the token to reach the client server 102 from the token server 106 is negligible in comparison to the drift experienced by the client 102. Hence, the time taken for the token to reach the client server 102 from the token server 106 is assumed to be zero. The time field may be populated with any time-related data provided it is consistently populated within the system 100. For example, preferably, the time-related data represents the server epoch time (e.g., seconds since Jan 11970 as UTC). In some examples, instead of taking the time taken for a token between servers to be negligible, the time is estimated and the estimation accounted for in determining the time difference. The estimation may comprise a prior knowledge or a best guess based on a history of known instances of sending tokens between the servers in question.

Beneficially, the method 1400 described with reference to Figure 14 moderates clock drift by allowing the client 102 to calculate its own clock drift from the token server 106 as a 'delta' and adjust its clock local time to match the token server time, without requiring further communication from the token server 106, or other time service.

Of course, although this method 1400 is described with reference to correcting drift on a client clock, it will be appreciated that, this method could in principle be applied to correcting server time drift throughout the system 100, keeping the token server 106 or servers as the authority.

### Hybrid logical clock and data consistency

In distributed authorisation systems, including geographically distributed systems such as the system shown in Figure 2, each server maintains a physical "wall clock" time by reference to network time protocol. Network time protocol is a networking protocol for clock synchronisation between computers by reference to timestamps generated by high-precision timekeeping devices and broadcast by time servers over the internet to receiving computers. While network time protocol can typically maintain time synchronisation between computers to within tens of milliseconds, network delays can cause clock drifts between servers, particularly between servers located in different geographical regions.

One problem associated with clock drifts between servers is data inconsistency, where different instances of the same data entry in two different locations are not the same. This can happen if the clocks of different servers drift from one another, such that according to a first server's clock a first instance of the data was written last (and is therefore the valid instance) while according to a second server's clock a second instance of the data (which does not match first instance of the data) was written last. For this reason, different servers can infer that different (and inconsistent) instances of data are valid.

In the context of distributed authorisation systems, such as the system shown in Figure 2, when a resource access token is issued by one of multiple token servers to a client, a record of that access token is stored so as to maintain a record of the access tokens that have been issued by the token server and a record of the access tokens that a particular user has been granted. This record can then be used in future by the token servers when processing a client request to refresh their access token when it expires, because the token server can check against the stored record to ensure that: the access token that the client is attempting to refresh was validly issued by the token server or another one of the multiple token servers in the system; the user has not already been issued a conflicting access token by another one of the multiple token servers; and the state of the user has not changed (e.g., the user has not logged out) such that no further tokens should be issued to the user before the user has been re-authenticated by the authentication server.

To provide a consistent record of this data, each region maintains a respective database (e.g., databases 126-1, 126-2 in Figure 2) which is replicated in a replicating data flow 130 between regions, such that, for example, a record written to the first database 126-1 in the first region by a token server 106-1 in the first region is replicated to the second database 126-2 in the second region and can be read by the token servers 106-3, 106-4 in the second region. However, as described above, since this data must be read each time the token server receives a token from the client (e.g., each time the token server services a refresh request from a client), the token server would need to query the database very frequently, which is relatively time consuming. Therefore, each server group 124 includes cache memories for the token servers, for example each token server may have a corresponding cache memory, to store the necessary data to service client request.

In a distributed system, it is computationally infeasible to replicate the cache memories of different token servers in the way that the data stored in the respective databases can be replicated. Therefore, a token server cannot know whether the data it holds in its cache is in fact valid, or whether it has been rendered invalid because another instance of the data in the cache of another server has been updated more recently. To solve this problem, the system of the present disclosure makes use of a hybrid logical clock (HLC) to provide each server with information about the validity of the data it holds in its cache, enabling the server to know in advance whether the data it holds in its cache remains valid (and can therefore be used to service a client request, such as a request to validate or refresh a token) or whether the data has been rendered invalid (and must therefore query the replicated database to obtain the most up-to-date data).

Each user of the authorisation system is assigned a respective hybrid logical clock in each region. For example, in the system shown in Figure 2, a given user would be assigned an HLC in each of the first and second regions. The server group in each region is the sole writer to the HLC for its region, and a reader for the HLCs in other regions. The HLC for one region is replicated using cloud datastore replication so that it is eventually available to be read in each other region.

The HLC in each region comprises two components: a physical clock component; and a logical clock component. The physical clock component represents a physical time according to a token server in the region (or token server group in the region) as determined using the network time protocol. The logical clock component comprises a counter which is incremented upon certain events. Together, the physical clock component and logical clock component combine to form a single hybrid logical clock value. The purpose of the HLC is to enable data and tokens to be "timestamped" with an HLC value which enables a server to determine whether the data it holds in its cache remains valid, or whether external events have rendered the data in its cache invalid.

In the following description, for the sake of simplicity and brevity the HLC values will be illustrated as single integer numbers. However, it should be appreciated that in practice the HLC value may be represented for example as a 64-bit number (representing the physical time component, as a network time protocol timestamp) followed by a 16-bit number (representing the value of the counter providing the logical clock component).

Referring to Figure 2, when a client 102 first contacts one of the token servers in the first region, such as token server 106-1, using data flow 114-1 to exchange an IdP token for a resource access token, the token server generates the resource access token and inserts in the token (e.g., as a field in the payload of the token) the HLC value for the user (to whom the token has been issued) in the first region. The HLC values for that user in the other region(s), as read from the replicated database by the token servers in the first region, are also inserted into the token. The token server 106-1 also stores in its cache 128-1 data relating to the resource access token it has issued (such as might be required later to validate or refresh the token), and also stores alongside that data the HLC value inserted into the token.

Subsequently, the client may take certain actions in relation to the user, in contact with different token servers in the system, which render invalid the data stored by the initial token server 106-1 in its cache 128-1. Examples of such actions include the client requesting a new token from a different token server in respect of a new login, which requires a previously issued token (issued by server 106-1) from a previous login to be invalidated. Alternatively, the client may contact another token server to logout a user session, requiring all active tokens to be invalidated. In these cases, while the other token servers that *are* aware of these actions will update the respective databases 126-1, 126-2 to record these actions, the token server 106-1 will not be aware of these changes until it queries the database to update the token data held in its cache 128-1. In the meantime, the token data held in the cache 128-1 would be invalid (i.e., out of date), due to the action taken by the client of which the token server 106-1 is unaware.

Accordingly, in the present disclosure, certain events in relation to a user cause the HLC value, and specifically the logical clock counter component of the HLC, to be incremented. For example, in the event that a user is issued a new token by token server 106-3 in the second region from a new login (requiring an existing token previously issued by token server 106-1 in the first region to be invalidated), the token server 106-3 increments the counter of the HLC in the second region from 1 to 2, and inserts the new HLC value in the new token it issues to the user. The token server 106-3 will also write to its local database 126-2 the updated details of the tokens issued to the user. If, subsequently, the user presents a token back to the token sever 106-1 in the first region for refresh, the token server 106-1 will recognise that the HLC value carried in the token is larger (i.e., 2) than the HLC value (i.e., 1) it currently has stored in association with token data relating to the respective user. From this information, the token server 106-1 can infer that an event must have occurred since it issued its token, which would render invalid the data it holds in its cache for that user. Therefore, the token server 106-1 will call the database 126-1 to obtain the most up-to-date token data for the user (which data will have been replicated from the database 126-2 in the second region). Upon calling the database to obtain the updated data, the token server 106-1 will recognise that the token is in fact invalid and will therefore refuse to refresh the token.

Conversely, if no such events have occurred since the token server 106-1 issued the token to the user, the value of the HLC carried by the token will be unchanged from when the HLC value was inserted into the token. Accordingly, when the token is presented back to the token server 106-1 (or to another token server in the same region or in another region) the token server will recognise that the HLC value in the token server is the same as the HLC value it currently has stored in association with token data relating to the user. From this information, the token server can infer that the data it holds in its cache for that user remains valid and can be used to refresh the token.

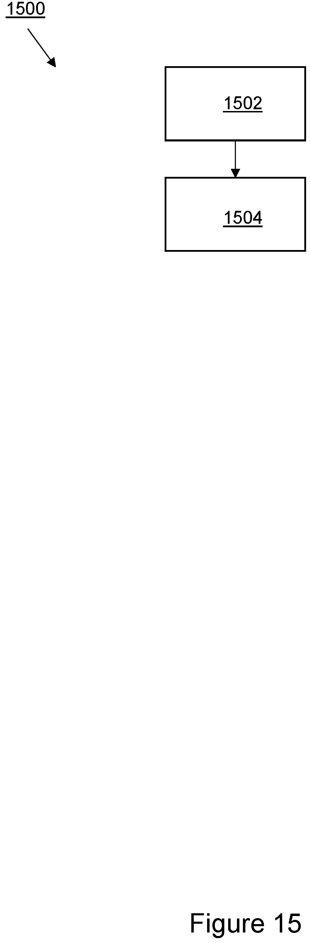

Figure 15 is a flow diagram of a method 1500 of using a hybrid logical clock so that a server knows in advance whether the data it holds in its cache remains valid.

In step 1502 a cache of a token server stores data relating to tokens issued to one or more clients.

The cache used by the token server may be local to the token server. The data may include the root token which acts as a root for a given login. The data may also include data specific to the user of a given client, such as an identifier relating to the user from an identify provider (which initially authenticated the user) or user attributes.

Alongside the data, the method may comprise also storing a first hybrid logical clock value associated with a user of the client. The first hybrid logical clock value may be the value of a hybrid logical clock for a user, as determined by the token server (or a related token server in the same region) at a particular time, such as the time the token was issued, or the time at which the server last updated its data in relation to that token.

At step 1504, the method comprises receiving at the token server a token from the client. For example, the client may present a refresh token to the token server and request a refreshed access token. The token received from the client at the token server may contain a second hybrid logical clock value associated with the user of the client. The second hybrid logical clock value may be the value of the hybrid logical clock for the user, as determined by a further token server or by the client, at a particular time, such as the time at which the token was issued or the time at which a state of the user (such as a login state) was last updated.

The method may further comprise an additional step 1506 not pictured in Figure 15, wherein if the second hybrid logical clock value is less than or equal to the first hybrid logical clock value: retrieving, from the cache, the data relating to the token and using the data retrieved from the cache to service a request from the client.

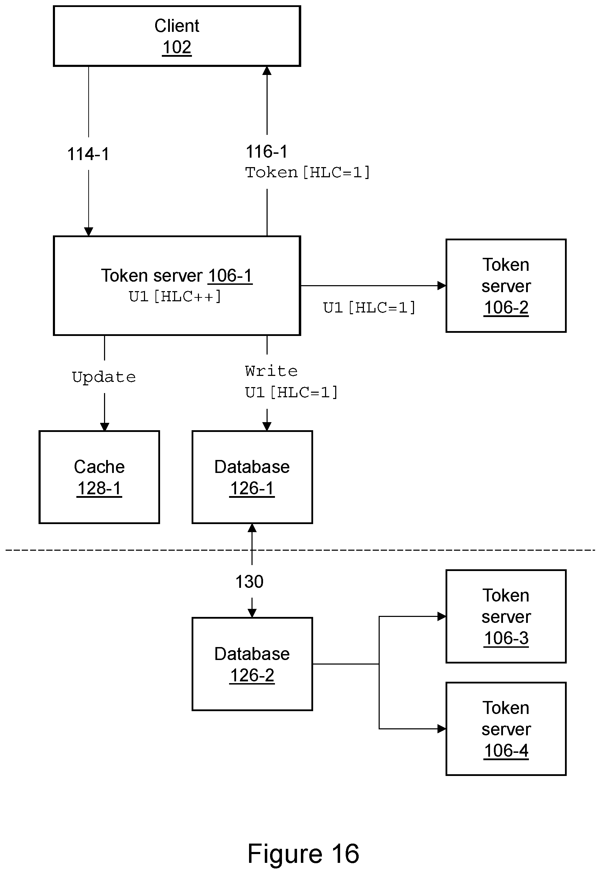

Figure 16 is a block diagram showing token and data exchange patterns in the case where an IdP token is swapped for a resource access token. In this example, a client 102 in a first region is contacting one or two token servers 106-1, 106-2 in the first region. As in the example of Figure 2, the token servers have a cache memory (of which one cache 128-1 is shown for token server 106-1) and the token servers can read and write to a database 126-1. In a second region, illustrated as separated from the first region by a dashed line, is another group of two further token servers 106-3, 106-4, which are configured to read and write to a database 126-2 in the second region which is a replicated with the database 126-1 in the first region.

The client 102 sends an IdP token to the token server 106-1 in the first region, and requests to exchange the IdP token for a resource access token using data flow 114-1. The token server 106-1 accordingly generates a resource access token and send the resource access token to the client using data flow 116-1. Encoded in the resource access token (e.g., as a field of the token payload) is the HLC value for the user (i.e., "U1") to whom the token is sent according to the token server 106-1 in the first region (and optionally also the HLC value for the user according to token server 106-1 in the second region, as known by the token server 106-1 in the first region). The HLC value for the user in this example is incremented (indicated by "++") to 1, and this value is included in the token sent to the client using data flow 116-1. In addition, the token server 106-1 broadcasts this HLC value to the other token server(s) 106-2 in its region, writes to the database 126-1 the HLC value alongside data relating to the token that has been issued to the client, and also updates its cache with the same data (including the HLC value). Eventually, this data will be replicated in the replicating data flow 130 to the database 126-2 in the second region and will be accessible by the token servers 106-3, 106-4 in the second region.

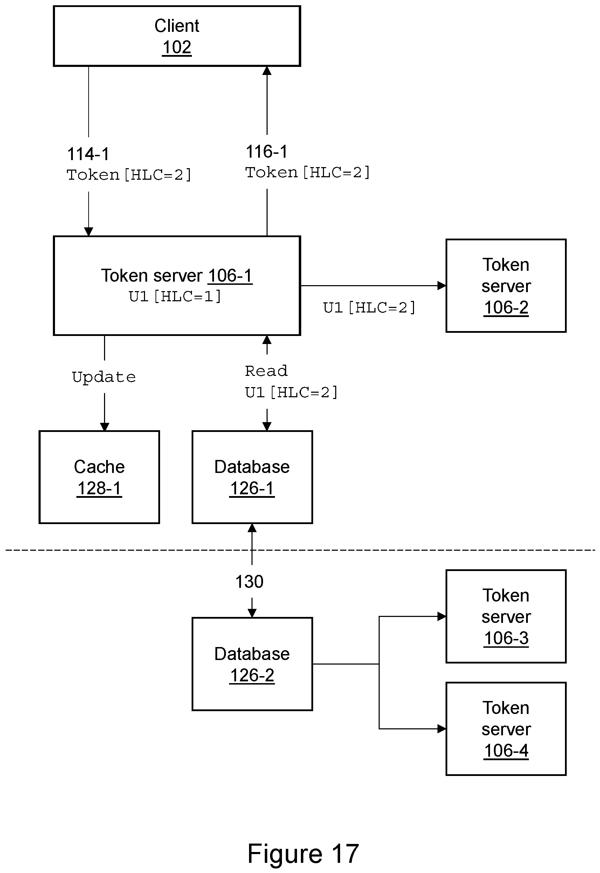

Figure 17 is a block diagram showing the case where a hybrid logical clock value carried by a token subsequently received at the token server is more than the hybrid logical clock value stored in a token server cache. In this example, due to an action (e.g., a logout action, or a new login action) in relation to the user, the HLC value included in the token has been incremented from 1 to 2 since it was issued by the token server 106-1. Because this action was carried out by a different token server (e.g., by one of the token servers 106-3, 106-4 in the second region) the token server 106-1 is initially unaware of this action, and maintains in its cache the token data that was initially generated when the token was issued, along with a HLC value of 1 - the same value as was included in the token when it was first issued. When the token is sent from the client 102 to the token server 106-1 using data flow 114-1, for example along with a request for the token sever 106-1 to refresh the token, the token server will read the HLC value (2) from the token and compare it with the HLC value (1) it has stored in its cache in relation to the token data it is holding for the user. The token server 106-1 will recognise that the HLC value in the token is more than the HLC stored in its cache, and will infer from this that an action must have occurred which renders invalid the token data it holds for this user in its cache (i.e., other more up-to-date information has been generated and recorded by another token server in the system). Accordingly, the token server 106-1 queries its local database 126-1 to read the most up-to-date token data for the user (i.e., the data stored with an associated HLC value of 2), which data will have been replicated to the database 126-1 from the database 126-2 in the region to which the data was written. The token server 106-1 then services the client request (e.g., refreshes the token) using the data it has read from the database, and also updates its own local cache 128-1 and broadcasts the data to the other token server(s) 106-2 in its region. The token server will also update its HLC to match the HLC carried by the token it received.

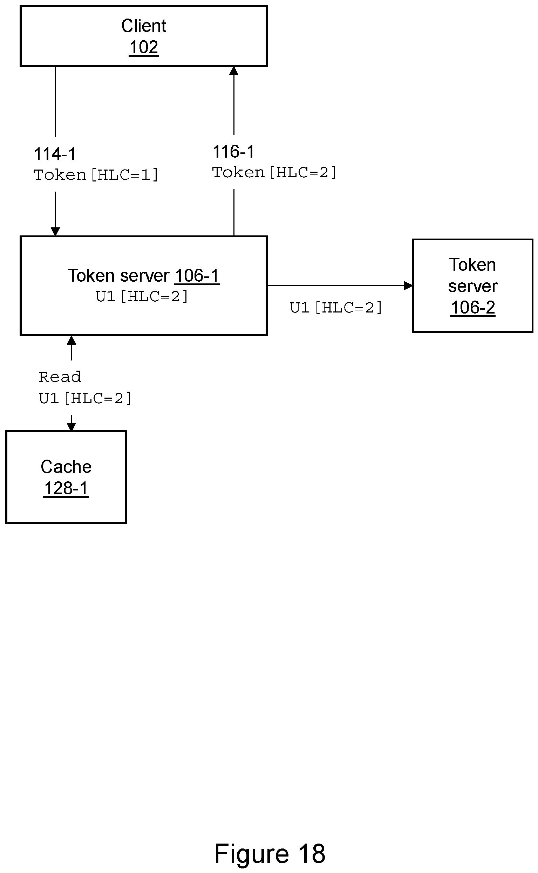

Figure 18 is a block diagram showing the case where a hybrid logical clock value carried by a token subsequently received at the token server is less than the hybrid logical clock value stored in a token server cache. In this example, an action in relation to the user has occurred which has caused the HLC value for the user, as maintained by the token server 106-1 in the first region, to be incremented from 1 to 2. Subsequently, the token server 106-1 receives, using data flow 114-1, a token from the client 102 which carries an HLC value for the user of 1. Because the HLC value of the token is less than the HLC value of the server 106-1, the server must have access to more up-to-date data in its cache than the data required to service the request from the user. This is because a larger HLC value indicates that the cache must have been updated after the token was issued. In this case, the token server 106-1 can be sure that the token data it has in its cache is still valid, and can service the client request (e.g., refresh the token) using the data stored in its cache without needed to call the database. For completeness, the up-to-date HLC value for the user is also broadcast to the other token server 106-2 in the first region.

If the HLC value carried by the token is the same as the HLC value of the token server 106-1 (i.e., rather than more than or less than the HLC value of the server) this indicates that either no actions have occurred in relation to the user or that any actions that have occurred in relation to the user are reflected in both the token and in the cache of the token server 106-1. In either case, the token data stored in the cache will be valid, and again the token server 106-1 can service the client request using the data stored in its cache without needed to call the database.

The present disclosure encompasses the following clauses, which are set forth in four different sets of clauses. It will be appreciated that one, some, or any of the clauses in any one of the four set of clauses may be combined with one, some, or any of the clauses in any other set of clauses, in any appropriate way and in any appropriate order.

While the clauses can be combined in any combination between any of the sets, each set of clauses indicates preferable dependencies between the clauses in that set of clauses. It will be appreciated that these preferable dependencies are merely preferable (and not essential).

### Key rotation clauses

1. A token key management method, comprising:
   maintaining a key set including a plurality of subsets of one or more keys corresponding to a plurality of respective temporally contiguous token signing periods including a current token signing period and a past and/or future token signing period.
2. The method of clause 1, wherein maintaining the key set comprises periodically updating the key set, preferably in response to receiving a key event notification indicating the presence of one or more new keys.
3. The method of clause 1 or 2, wherein maintaining the key set comprises periodically updating the key set by performing a key set rotation operation, whereby the keys of the most temporally advanced subset of the plurality of subsets are replaced with one or more new keys, and the keys of each other subset are replaced with the keys of the respective temporally proceeding subset of the plurality of subsets.
4. The method of clause 2 or 3, wherein periodically updating the key set comprises: retrieving an updated key set comprising the one or more new keys in response to receiving a key event notification indicating the presence of the one or more new keys; and replacing the key set with the updated key set.
5. The method of clause 4, wherein the updated key set is retrieved from a key database, and wherein the key event notification is generated in response to the one or more new keys being stored in the key database;
   optionally or preferably, wherein the key database stores subsets of keys corresponding to multiple consecutive token signing periods including the current token signing period and past token signing periods.
6. The method of clause 4 or 5, wherein the updated key set is retrieved from a key database based on a time stamp associated with each respective subset of keys of the updated key set stored in the key database; preferably by identifying the most recent plurality of subsets of keys stored in the key database based on their associated time stamps.
7. The method of any preceding clause, wherein one or more new keys are stored in a key database in association with an identifier, and the identifier is further stored in a further database in association with a time stamp; and
   preferably, wherein maintaining the key set comprises periodically updating the key set, preferably in response to receiving a key event notification, by replacing the key set with an updated the key set including the one or more new keys, and wherein the updated key set is retrieved from the key database using the most recent plurality of identifiers determined from the further database based on their associated time stamps.
8. The method of clause 7, wherein the key set is periodically updated in response to receiving a key event notification, and the key event notification is generated in response to the further database being updated to store the identifier in association with the time stamp; and/or
   wherein the further database is updated to store the identifier in association with the time stamp responsive to confirmation of the one or more new keys being stored in the key database.
9. The method of any preceding clause, wherein maintaining the key set comprises maintaining the key set at one or more token servers;
   optionally or preferably, wherein the one or more keys of each subset of the key set comprise key pairs, and the one or more token servers are configured to: use a private part of a key pair of the subset corresponding to current token signing period for signing tokens; and provide public parts of the key pairs of the key set to a verifying entity for use in verifying signed tokens.
10. The method of clause 9, wherein the one or more token servers comprise a first token server in a first geographic location and a second token in a second geographic location different to the first geographic location.
11. The method of clause 9 or 10, wherein maintaining the key set comprises periodically updating the key set at each token server by:
   retrieving, at each token server, an updated key set including one or more new keys from a key database in response to receiving a key event notification indicating the presence of the one or more new keys; and
   replacing the key set at the respective token server with the updated key set.
12. The method of clause 11, further comprising:
   monitoring the key set at each token server, and
   causing, if the key sets at the respective token servers do not match within a predefined time period following a key set update, each token server to:
      retrieve the updated key set from the key database again; and
      replace the previous key set with the retrieved updated key set.
13. The method of clause 12, further comprising:
   sending, by each token server, a notification containing information indicating a state of each of the subsets of keys of the updated key set at the respective token server; and
   monitoring the key state information received from each token server.
14. The method of clause 12 or 13, wherein causing each token server to retrieve the updated key set from the key database again comprises: generating a further key event notification.
15. The method of clause 14, wherein the one or more new keys are stored in the key database in association with an identifier, and the key event notification is generated in response to a further database being updated to store the identifier in association with a time stamp, and wherein generating the further key event notification comprises:
   updating the further database, preferably by updating a latest time stamp associated with a latest identifier; and
   generating the further key event notification in response to updating the further database.
16. The method of any preceding clause, wherein maintaining the key set comprises periodically updating the key set by:
   retrieving an updated key set including one or more new keys from a key database in response to receiving a key event notification indicating the presence of the one or more new keys; and
   replacing the key set with the updated key set, and
   wherein the key database is a multi-region database system comprising replicated databases accessible in multiple different geographic regions, and wherein the key event notification is generated after confirmation of replication of the one or more new keys across the replicated databases of the key database.
17. The method of any preceding clause, wherein maintaining the key set comprises storing the key set at a token server, preferably in a non-persistent memory such as a memory cache.
18. The method of any preceding clause, wherein the token signing period is between half a day and 5 days, preferably one day.
19. A token-based method of authorising user access to a resource and/or authenticating a user, wherein token keys are managed according to the method of any of clauses 1 to 18, and preferably wherein user access to the resource is authorised and/or a user is authenticated in dependence on a signed token being verified by a verifying entity and/or in dependence on a token being signed and/or verified using a key from the key set.
20. A token key management system, comprising:
   means, including one or more servers with one or more processing devices and associated memory, for maintaining a key set including a plurality of subsets of one or more keys corresponding to a plurality of respective temporally contiguous token signing periods including a current token signing period and a past and/or future token signing period.
21. The system of clause 20, wherein maintaining the key set comprises periodically updating the key set, preferably in response to receiving a key event notification indicating the presence of one or more new keys.
22. The system of clause 20 or 21, wherein maintaining the key set comprises periodically updating the key set by performing a key set rotation operation, whereby the keys of the most temporally advanced subset of the plurality of subsets are replaced with one or more new keys, and the keys of each other subset are replaced with the keys of the respective temporally proceeding subset of the plurality of subsets.
23. The system of clause 21 or 22, wherein the means is further for periodically updating the key set by: retrieving an updated key set comprising the one or more new keys in response to receiving a key event notification indicating the presence of the one or more new keys; and replacing the key set with the updated key set.
24. The system of clause 23, wherein the means is further for retrieving the updated key set from a key database, and wherein the key event notification is generated in response to the one or more new keys being stored in the key database;
   optionally or preferably, wherein the means includes the key database in communication with the one or more servers, the key database storing subsets of keys corresponding to multiple consecutive token signing periods including the current token signing period and past token signing periods.
25. The system of clause 23 or 24, wherein the means is further for retrieving the updated key set from a key database based on a time stamp associated with each respective subset of keys of the updated key set stored in the key database; preferably by identifying the most recent plurality of subsets of keys stored in the key database based on their associated time stamps.
26. The system of any of clauses 20 to 25, wherein one or more new keys are stored in a key database in association with an identifier, and the identifier is further stored in a further database in association with a time stamp; wherein maintaining the key set by the means comprises periodically updating the key set, preferably in response to receiving a key event notification, by replacing the key set with an updated the key set including the one or more new keys, and wherein the updated key set is retrieved from the key database using the most recent plurality of identifiers determined from the further database based on their associated time stamps; and, optionally or preferably, wherein the means includes the key database and the further database in communication with the one or more servers.
27. The system of clause 26, wherein the key set is periodically updated in response to receiving a key event notification, and the key event notification is generated in response to the further database being updated to store the identifier in association with the time stamp; and/or wherein the further database is updated to store the identifier in association with the time stamp responsive to confirmation of the one or more new keys being stored in the key database.
28. The system of any of clauses 20 to 27, wherein the one or more servers includes one or more token servers at which the key set is maintained;
   optionally or preferably, wherein the one or more keys of each subset of the key set comprise key pairs, and the one or more token servers are configured to: use a private part of a key pair of the subset corresponding to current token signing period for signing tokens; and provide public parts of the key pairs of the key set to a verifying entity for use in verifying signed tokens.
29. The system of clause 28, wherein the one or more token servers comprise a first token server in a first geographic location and a second token in a second geographic location different to the first geographic location.
30. The system of clause 28 or 29, wherein maintaining the key set by the means comprises periodically updating the key set at each token server by:
   retrieving, at each token server, an updated key set including one or more new keys from a key database in response to receiving a key event notification indicating the presence of the one or more new keys; and
   replacing the key set at the respective token server with the updated key set;
   optionally or preferably, wherein the means includes the key database in communication with the one or more servers including the one or more token servers.
31. The system of clause 30, wherein the means is further for: monitoring the key set at each token server, and causing, if the key sets at the respective token servers do not match within a predefined time period following a key set update, each token server to: retrieve the updated key set from the key database again; and replace the previous key set with the retrieved updated key set.
32. The system of clause 31, wherein each token server is configured send a notification containing information indicating a state of each of the subsets of keys of the updated key set at the respective token server; and the means is for monitoring the key set at each token server via the key state information provided by each token server;
   optionally or preferably, wherein the means for monitoring the key state information comprises a further server for processing the key state information received from each token server.
33. The system of clause 31 or 32, wherein causing each token server to retrieve the updated key set from the key database again comprises: generating a further key event notification.
34. The system of clause 33, wherein the one or more new keys are stored in the key database in association with an identifier, and the key event notification is generated in response to a further database being updated to store the identifier in association with a time stamp, and wherein generating the further key event notification comprises:
   updating the further database, preferably by updating a latest time stamp associated with a latest identifier; and
   generating the further key event notification in response to updating the further database.
35. The system of any of clauses 20 to 34, wherein maintaining the key set by the means comprises periodically updating the key set by:
   retrieving an updated key set including one or more new keys from a key database in response to receiving a key event notification indicating the presence of the one or more new keys; and
   replacing the key set with the updated key set, and
   wherein the key database is a multi-region database system comprising replicated databases accessible in multiple different geographic regions, and wherein the key event notification is generated after confirmation of replication of the one or more new keys across the replicated databases of the key database;
   optionally or preferably, wherein the means includes the key database in communication with the one or more servers.
36. The system of any of clauses 20 to 35, wherein the one or more servers includes one or more token servers at which the key set is maintained, and wherein the one or more token servers are configured to store the key set, preferably in a non-persistent memory such as a memory cache.
37. The system of any of clauses 20 to 36, wherein the token signing period is between half a day and 5 days, preferably one day.
38. The system of any of clauses 20 to 37, wherein the means includes:
   one or more token servers at which the key set is maintained; and
   a key database in communication with the one or more token servers, the key database storing subsets of one or more keys corresponding to multiple consecutive token signing periods including the current token signing period and past token signing periods,
   wherein each token server is configured to:
      retrieve an updated key set including one or more new keys from the key database, preferably in response to receiving a key event notification indicating the presence of the one or more new keys; and
      replace the key set with the updated key set; and
   optionally or preferably, wherein the one or more keys of each subset of the key set comprise key pairs, and the one or more token servers are further configured to: use a private part of a key pair of the subset corresponding to current token signing period for signing tokens; and provide public parts of the key pairs of the key set to a verifying entity for use in verifying signed tokens.
39. A system for token-based authorisation of user access to a resource and/or authentication of a user, comprising the system of any of clauses 20 to 38, preferably wherein user access to the resource is authorised and/or a user is authenticated in dependence on a signed token being verified by a verifying entity and/or in dependence on a token being signed and/or verified using a key from the key set.
40. A computer program product for carrying out a token key management method, the method comprising:
   maintaining a key set including a plurality of subsets of one or more keys corresponding to a plurality of respective temporally contiguous token signing periods including a current token signing period and a past and/or future token signing period.
41. The computer program product of clause 40, wherein maintaining the key set comprises periodically updating the key set, preferably in response to receiving a key event notification indicating the presence of one or more new keys.
42. The computer program product of clause 40 or 41, wherein maintaining the key set comprises periodically updating the key set by performing a key set rotation operation, whereby the keys of the most temporally advanced subset of the plurality of subsets are replaced with one or more new keys, and the keys of each other subset are replaced with the keys of the respective temporally proceeding subset of the plurality of subsets.
43. The computer program product of clause 41 or 42, wherein periodically updating the key set comprises: retrieving an updated key set comprising the one or more new keys in response to receiving a key event notification indicating the presence of the one or more new keys; and replacing the key set with the updated key set.
44. The computer program product of clause 43, wherein the updated key set is retrieved from a key database, and wherein the key event notification is generated in response to the one or more new keys being stored in the key database;
   optionally or preferably, wherein the key database stores subsets of keys corresponding to multiple consecutive token signing periods including the current token signing period and past token signing periods.
45. The computer program product of clause 43 or 44, wherein the updated key set is retrieved from a key database based on a time stamp associated with each respective subset of keys of the updated key set stored in the key database; preferably by identifying the most recent plurality of subsets of keys stored in the key database based on their associated time stamps.
46. The computer program product of any of clauses 40 to 45, wherein one or more new keys are stored in a key database in association with an identifier, and the identifier is further stored in a further database in association with a time stamp; and
   preferably, wherein maintaining the key set comprises periodically updating the key set, preferably in response to receiving a key event notification, by replacing the key set with an updated the key set including the one or more new keys, and wherein the updated key set is retrieved from the key database using the most recent plurality of identifiers determined from the further database based on their associated time stamps.
47. The computer program product of clause 46, wherein the key set is periodically updated in response to receiving a key event notification, and the key event notification is generated in response to the further database being updated to store the identifier in association with the time stamp; and/or
   wherein the further database is updated to store the identifier in association with the time stamp responsive to confirmation of the one or more new keys being stored in the key database.
48. The computer program product of any of clauses 40 to 47, wherein maintaining the key set comprises maintaining the key set at one or more token servers;
   optionally or preferably, wherein the one or more keys of each subset of the key set comprise key pairs, and the one or more token servers are configured to: use a private part of a key pair of the subset corresponding to current token signing period for signing tokens; and provide public parts of the key pairs of the key set to a verifying entity for use in verifying signed tokens.
49. The computer program product of clause 48, wherein the one or more token servers comprise a first token server in a first geographic location and a second token in a second geographic location different to the first geographic location.
50. The computer program product of clause 48 or 49, wherein maintaining the key set comprises periodically updating the key set at each token server by:
   retrieving, at each token server, an updated key set including one or more new keys from a key database in response to receiving a key event notification indicating the presence of the one or more new keys; and
   replacing the key set at the respective token server with the updated key set.
51. The computer program product of clause 50, further comprising:
   monitoring the key set at each token server, and
   causing, if the key sets at the respective token servers do not match within a predefined time period following a key set update, each token server to:
      retrieve the updated key set from the key database again; and
      replace the previous key set with the retrieved updated key set.
52. The computer program product of clause 51, further comprising:
   sending, by each token server, a notification containing information indicating a state of each of the subsets of keys of the updated key set at the respective token server; and
   monitoring the key state information received from each token server.
53. The computer program product of clause 51 or 52, wherein causing each token server to retrieve the updated key set from the key database again comprises: generating a further key event notification.
54. The computer program product of clause 53, wherein the one or more new keys are stored in the key database in association with an identifier, and the key event notification is generated in response to a further database being updated to store the identifier in association with a time stamp, and wherein generating the further key event notification comprises:
   updating the further database, preferably by updating a latest time stamp associated with a latest identifier; and
   generating the further key event notification in response to updating the further database.
55. The computer program product of any of clauses 40 to 54, wherein maintaining the key set comprises periodically updating the key set by:
   retrieving an updated key set including one or more new keys from a key database in response to receiving a key event notification indicating the presence of the one or more new keys; and
   replacing the key set with the updated key set, and
   wherein the key database is a multi-region database system comprising replicated databases accessible in multiple different geographic regions, and wherein the key event notification is generated after confirmation of replication of the one or more new keys across the replicated databases of the key database.
56. The computer program product of any of clauses 40 to 55, wherein maintaining the key set comprises storing the key set at a token server, preferably in a non-persistent memory such as a memory cache.
57. The computer program product of any of clauses 40 to 56, wherein the token signing period is between half a day and 5 days, preferably one day.
58. A computer program product for carrying out a token-based method of authorising user access to a resource and/or authenticating a user, wherein token keys are managed according to the method of any of clauses 1 to 18, and preferably wherein user access to the resource is authorised and/or a user is authenticated in dependence on a signed token being verified by a verifying entity and/or in dependence on a token being signed and/or verified using a key from the key set.

### Token sets clauses

1. A set-based authentication method comprising:
   generating a plurality of access tokens defining a set; and
   generating one refresh token corresponding to the said plurality of access tokens, wherein the refresh token defines at least one time frame within which said plurality of access tokens can be refreshed.
2. The method of clause 1, wherein the refresh token defines a time frame for each access token in the set.
3. The method of clause 1 or 2, further comprising sending said plurality of access tokens and the corresponding one refresh token to a client.
4. The method of any preceding clause, further comprising: receiving a respective access request corresponding to each of said plurality of access tokens; and requesting an identification token from a client, the identification token corresponding to one or more of the access requests; and receiving an identification token from the client corresponding to one or more of the access requests.
5. The method of any preceding clause, further comprising: receiving a further access request; requesting an identification token from a client; and receiving an identification token from the client.
6. The method of clause 5, further comprising: receiving the refresh token from the client; generating a new access token; adding the new access token to the set; and defining, in the refresh token, a time frame within which the new access token can be refreshed.
7. The method of clause 6, further comprising: sending the new access token and the refresh token to the client.
8. The method of any preceding clause, each access token having a refresh capability, a plurality of access tokens being associated with a predetermined client.
9. The method of any preceding clause, further comprising: refreshing at least one of the plurality of access tokens using the refresh token.
10. The method of clause 9, wherein refreshing the at least one of the plurality of access tokens using the refresh token comprises: receiving an access request for a previously accessed destination; receiving a corresponding refresh token; determining whether the access request for the previously accessed destination is valid based on the refresh token.
11. The method of clause 10, further comprising, in response to a determination that the access request is valid: generating an access token corresponding to the previously accessed destination; sending the generated access request and the refresh token to the client.
12. The method of any preceding clause, further comprising discarding an expired refresh token and issuing a new refresh token.
13. The method of clause 12 comprising: receiving an access request for a previously accessed destination; receiving a corresponding refresh token; determining that the corresponding refresh token has expired; requesting an identification token from the client.
14. The method of any preceding clause, further comprising revoking the access refresh capabilities for the predetermined client.
15. The method of clause 14, wherein revoking the access refresh capabilities for a predetermined client comprises: receiving a revocation request comprising an identification token; requesting, from a client, a refresh token associated with the identification token; and removing the time frames defined within the refresh token, preferably wherein removing any time frames defined within the resource token comprises deleting the refresh token.
16. The method of any preceding clause, wherein the plurality of access tokens may be one or more of: an API token; a data token; a restricted token; and a third party token.
17. The method of any preceding clause wherein the one refresh token corresponds to a set of access tokens.
18. A token-based method of authorising user access to a resource and/or authenticating a user, wherein token keys are managed according to the method of any of clauses 1 to 17, and preferably wherein user access to the resource is authorised and/or a user is authenticated in dependence on a signed token being verified by a verifying entity.
19. A set-based authorisation system comprising: means (preferably in the form of one or more servers with one or more processing devices and associated memory) for generating a set comprising a plurality of access tokens; and generating one refresh token corresponding to the said plurality of access tokens, wherein the refresh token defines at least one time frame within which said plurality of access tokens can be refreshed.
20. The system of clause 19, wherein the refresh token defines a time frame for each access token in the set.
21. The system of clause 19 or 20, wherein the means is further for sending said plurality of access tokens and the corresponding one refresh token to a client.
22. The system of any one of clauses 19 to 21, wherein the means is further for: receiving a respective access request corresponding to each of said plurality of access tokens; and requesting an identification token from a client, the identification token corresponding to one or more of the access requests; and receiving an identification token from the client corresponding to one or more of the access requests.
23. The system of any one of clauses 19 to 22, wherein the means is further for receiving a further access request; requesting, an identification token from a client; and receiving an identification token from the client.
24. The system of clause 23, wherein the means is further for: receiving the refresh token from the client; generating a new access token; adding the new access token to the set; and defining, in the refresh token, a time frame within which the new access token can be refreshed.
25. The system of clause 24, wherein the means is further for: sending the new access token and the refresh token to the client.
26. The system of any one of clauses 19 to 25, wherein each access token having a refresh capability, a plurality of access tokens being associated with a predetermined client.
27. The system of any one of clauses 19 to 26, wherein the means is further for: refreshing at least one of the plurality of access tokens using the refresh token.
28. The system of clause 27, further wherein refreshing the at least one of the plurality of access tokens using the refresh token comprises: receiving an access request for a previously accessed destination; receiving a corresponding refresh token; determining whether the access request for the previously accessed destination is valid based on the refresh token;
29. The system of clause 28, wherein in response to a determination that the access request is valid, the means is further for: generating an access token corresponding to the previously accessed destination; sending the generated access request and the refresh token to the client server.
30. The system of any one of clauses 19 to 29, wherein the means is further for: discarding an expired refresh token and issuing a new refresh token.
31. The system of clause 30 wherein the means is further for: receiving an access request for a previously accessed destination; receiving a corresponding refresh token; determining that the corresponding refresh token has expired; requesting an identification token from the client.
32. The system of any one of clauses 19 to 31 wherein the means is further for revoking the access refresh capabilities for the predetermined client.
33. The system of clause 32, wherein revoking the access refresh capabilities for a predetermined client comprises: receiving a revocation request comprising an identification token; requesting, from a client, a refresh token associated with the identification token; and removing the time frames defined within the refresh token, preferably wherein removing any time frames defined within the resource token comprises deleting the refresh token.
34. The system of any one of clauses 19 to 33, wherein the plurality of access tokens may be one or more of: an API token; a data token; a restricted token; and a third party token.
35. The system of any one of clauses 19 to 34, wherein the one refresh token corresponds to a set of access tokens.
36. A token-based system of authorising user access to a resource and/or authenticating a user, wherein token keys are managed according to the system of any of clauses 19 to 35, and preferably wherein user access to the resource is authorised and/or a user is authenticated in dependence on a signed token being verified by a verifying entity.
37. The system of any one of clauses 19 to 36 wherein the one or more servers are one or more token servers.
38. The system of any one of clauses 19 to 37, the system further comprising: one or more client servers; one or more authentication servers; one or more resource servers; one or more databases associated the servers; and one or more caches associated with the servers.
39. A computer program product for carrying out a set-based authentication method, the method comprising:
   generating a plurality of access tokens defining a set; and
   generating one refresh token corresponding to the said plurality of access tokens, wherein the refresh token defines at least one time frame within which said plurality of access tokens can be refreshed.
40. The computer program product of clause 39, wherein the refresh token defines a time frame for each access token in the set.
41. The computer program product of clause 39 or 40, further comprising sending said plurality of access tokens and the corresponding one refresh token to a client.
42. The computer program product of any of clauses 39 to 41, further comprising: receiving a respective access request corresponding to each of said plurality of access tokens; and requesting an identification token from a client, the identification token corresponding to one or more of the access requests; and receiving an identification token from the client corresponding to one or more of the access requests.
43. The computer program product of any of clauses 39 to 42, further comprising: receiving a further access request; requesting an identification token from a client; and receiving an identification token from the client.
44. The computer program product of clause 43, further comprising: receiving the refresh token from the client; generating a new access token; adding the new access token to the set; and defining, in the refresh token, a time frame within which the new access token can be refreshed.
45. The computer program product of clause 44, further comprising: sending the new access token and the refresh token to the client.
46. The computer program product of any of clauses 39 to 45, each access token having a refresh capability, a plurality of access tokens being associated with a predetermined client.
47. The computer program product of any of clauses 39 to 46, further comprising: refreshing at least one of the plurality of access tokens using the refresh token.
48. The computer program product of clause 47, wherein refreshing the at least one of the plurality of access tokens using the refresh token comprises: receiving an access request for a previously accessed destination; receiving a corresponding refresh token; determining whether the access request for the previously accessed destination is valid based on the refresh token.
49. The computer program product of clause 48, further comprising, in response to a determination that the access request is valid: generating an access token corresponding to the previously accessed destination; sending the generated access request and the refresh token to the client.
50. The computer program product of any of clauses 39 to 49, further comprising discarding an expired refresh token and issuing a new refresh token.
51. The computer program product of clause 50, comprising: receiving an access request for a previously accessed destination; receiving a corresponding refresh token; determining that the corresponding refresh token has expired; requesting an identification token from the client.
52. The computer program product of any of clauses 39 to 51, further comprising revoking the access refresh capabilities for the predetermined client.
53. The computer program product of clause 52, wherein revoking the access refresh capabilities for a predetermined client comprises: receiving a revocation request comprising an identification token; requesting, from a client, a refresh token associated with the identification token; and removing the time frames defined within the refresh token, preferably wherein removing any time frames defined within the resource token comprises deleting the refresh token.
54. The computer program product of any of clauses 39 to 53, wherein the plurality of access tokens may be one or more of: an API token; a data token; a restricted token; and a third party token.
55. The computer program product of any of clauses 39 to 54, wherein the one refresh token corresponds to a set of access tokens.
56. A computer program product for carrying out a token-based method of authorising user access to a resource and/or authenticating a user, wherein token keys are managed according to the method of any of clauses 1 to 17, and preferably wherein user access to the resource is authorised and/or a user is authenticated in dependence on a signed token being verified by a verifying entity.

### Client clock drift clauses

1. A method of synchronising an authorisation system, the method comprising:
   receiving an indication of a time at a time authority;
   comparing the indication of a time to a clock corresponding to a server;
   determining an error in the clock corresponding to the server based on the indication of a time; and
   adjusting the clock based on the determined error.
2. The method of clause 1, wherein the indication of a time is received in a refresh token.
3. The method of any preceding clause, further comprising: receiving an access token with a corresponding expiry time and determining when the access token expires based on the adjusted clock and the corresponding expiry time.
4. The method of any of clause 2 or 3, the method further comprising: receiving a second refresh token comprising an indication of a second time; comparing the second indication of a time to the clock corresponding to the server; and determining a second error in the clock corresponding to the server based on the second indication of a time.
5. The method of clause 4, further comprising: comparing the second error to a threshold; and in response to the second error exceeding the threshold, adjusting the clock based on the second error.
6. The method of clause 2 or 3, the method further comprising: receiving a second refresh token; and determining an elapsed time between the refresh token and the second refresh token.
7. The method of clause 6, further comprising: comparing the elapsed time to a second threshold; in response to the amount of elapsed time exceeding the second threshold: comparing the second indication of a time to the clock corresponding to the server; determining a second error in the clock corresponding to the server based on the second indication of a time; adjusting the clock based on the second error.
8. The method of any preceding clause, wherein the time corresponds to an epoch time of a token server.
9. The method of clause 8, wherein a travel time from the token server is discounted.
10. A token-based method of authorising user access to a resource and/or authenticating a user, wherein token keys are managed according to the method of any of clauses 1 to 9, and preferably wherein user access to the resource is authorised and/or a user is authenticated in dependence on a signed token being verified by a verifying entity.
11. A synchronised authorisation system comprising means (preferably in the form of one or more servers with one or more processing devices and associated memory) for receiving a second refresh token and determining a number of seconds between the refresh token and the second refresh token.
12. The system of clause 11, wherein the indication of a time is received in a refresh token.
13. The system of clause 11 or 12, wherein the means is further for: receiving an access token with an expiry time and determining when the access token expires based on the adjusted clock and the expiry time.
14. The system of clause 12 or 13, wherein the means is further for:
   receiving a second refresh token comprising an indication of a second time;
   comparing the second indication of a time to the clock corresponding to the server; and
   determining a second error in the clock corresponding to the server based on the second indication of a time.
15. The system of clause 14, wherein the means is further for:
   comparing the second error to a threshold; and
   in response to the second error exceeding the threshold, adjusting the clock based on the second error.
16. The system of clause 12 or 13, wherein the means is further for:
   receiving a second refresh token; and
   determining a number of seconds between the refresh token and the second refresh token.
17. The system of clause 16, wherein the means is further for:
   comparing the number of seconds to a second threshold;
   in response to the number of seconds exceeding the second threshold:
      comparing the second indication of a time to the clock corresponding to the server;
      determining a second error in the clock corresponding to the server based on the second indication of a time;
      adjusting the clock based on the second error.
18. The system of any one of clauses 11 to 17, wherein the time corresponds to an epoch time of a token server.
19. The system of clause 18, wherein it is assumed that a travel time from the token server is negligible.
20. The system of any one of clauses 11 to 19 wherein the means is a client server.
21. The system of any one of clauses 11 to 20, further comprising one or more token servers, wherein at least one of the token servers is the time authority.
22. A system for token-based authorisation of user access to a resource and/or authentication of a user, comprising the system of any of clauses 11 to 21 preferably wherein user access to the resource is authorised and/or a user is authenticated in dependence on a signed token being verified by a verifying entity.
23. A computer program product for carrying out a method of synchronising an authorisation system, the method comprising:
   receiving an indication of a time at a time authority;
   comparing the indication of a time to a clock corresponding to a server;
   determining an error in the clock corresponding to the server based on the indication of a time; and
   adjusting the clock based on the determined error.
24. The computer program product of clause 23, wherein the indication of a time is received in a refresh token.
25. The computer program product of clause 23 or 24, further comprising: receiving an access token with a corresponding expiry time and determining when the access token expires based on the adjusted clock and the corresponding expiry time.
26. The computer program product of clause 24 or 25, the method further comprising: receiving a second refresh token comprising an indication of a second time; comparing the second indication of a time to the clock corresponding to the server; and determining a second error in the clock corresponding to the server based on the second indication of a time.
27. The computer program product of clause 26, further comprising: comparing the second error to a threshold; and in response to the second error exceeding the threshold, adjusting the clock based on the second error.
28. The computer program product of clause 24 or 25, the method further comprising: receiving a second refresh token; and determining an elapsed time between the refresh token and the second refresh token.
29. The computer program product of clause 28, further comprising: comparing the elapsed time to a second threshold; in response to the amount of elapsed time exceeding the second threshold: comparing the second indication of a time to the clock corresponding to the server; determining a second error in the clock corresponding to the server based on the second indication of a time; adjusting the clock based on the second error.
30. The computer program product of any of clauses 23 to 29, wherein the time corresponds to an epoch time of a token server.
31. The computer program product of clause 30, wherein a travel time from the token server is discounted.
32. A computer program product for carrying out a token-based method of authorising user access to a resource and/or authenticating a user, wherein token keys are managed according to the method of any of clauses 1 to 9, and preferably wherein user access to the resource is authorised and/or a user is authenticated in dependence on a signed token being verified by a verifying entity.

### Hybrid logical clock clauses

1. A method comprising:
   storing, in a cache of a token server, data relating to a token issued to a client, comprising storing a first hybrid logical clock value associated with a user of the client; and
   receiving a token from the client, wherein the token contains a second hybrid logical clock value associated with the user of the client.
2. The method of clause 1, wherein data is retrieved from different memory locations in dependence on the relationship between the second hybrid logical clock value and the first hybrid logical clock value.
3. The method of clause 2, wherein, if the second hybrid logical clock value is less than or equal to the first hybrid logical clock value, the data relating to the token is retrieved from the cache and used to service a request from the client.
4. The method of clause 2 or 3, wherein the request from the client comprises a request to validate or refresh the token, the method comprising: if the second hybrid logical clock value is less than or equal to the first hybrid logical clock value, validating or refreshing the token using the data retrieved from the cache.
5. The method of clause 3 or 4, wherein: if the second hybrid logical clock value is more than the first hybrid logical clock value: data relating to the token is retrieved from a database associated with the token server and used to service a request from the client.
6. The method of clause 4 or 5, wherein if the request from the client comprises a request to validate or refresh the token, the method comprises: if the second hybrid logical clock value is more than the first hybrid logical clock value, validating or refreshing the token using the data retrieved from the database.
7. The method of clause 5 or 6, further comprising: replicating data relating to tokens issued by one more further token servers from one or more further databases associated with the one or more further token servers.
8. The method of any one of clauses 5 to 7, further comprising: storing, in the database associated with the token server, the data relating to the token issued to a client, comprising storing the first hybrid logical clock value associated with a user of the client.
9. The method of any preceding clause, further comprising: issuing, from the token server, a resource access token to the client in exchange for an identity provider token provided by the client; and inserting in the resource access token the first hybrid logical clock value associated with a user of the client at the time of issuing the resource access token.
10. The method of clause 9, wherein the first hybrid logical clock value is inserted in a payload of the token.
11. The method of clause 9 or 10, wherein the first hybrid logical clock value is encoded in the token.
12. The method of any preceding clause, wherein each hybrid logical clock value comprises a physical clock component representing a physical time property of an event relating to the user.
13. The method of clause 12, wherein the physical time property is based on a network time protocol timestamp.
14. The method of any preceding clause, wherein each hybrid logical clock value comprises a counter component representing a chronological property of an event relating to the user.
15. The method of clause 14, wherein the chronological property is based on the sequence of the event in relation to other events.
16. The method of clause 14 or 15, further comprising incrementing the counter upon each event.
17. The method of any of clauses 14 to 16, further comprising incrementing the counter if the token server determines that the physical time property for a further token server is earlier than the physical time property for the token server.
18. The method of any of clauses 14 to 17, further comprising resetting the counter to zero if the token server determines, preferably at an event relating to the user, that the physical time property for a further token server is earlier than the physical time property for the token server.
19. The method of clause 17 or 18, wherein the further token server is located in a geographical region that is different to the geographical region in which the token server is located.
20. The method of any one of clauses 14 to 19, further comprising the token server notifying at least one further token server of an updated hybrid logical clock value for the user upon incrementing the counter.
21. The method of any one of clauses 12 to 20, wherein the event is an issuance of a token by the token server.
22. The method of any one of clauses 12 to 21, wherein the event is a login event, preferably comprising authentication of the user by an authentication server.
23. The method of any one of clauses 12 to 22, wherein the event is a logout event.
24. The method of any one of clauses 12 to 23, wherein the event is a change in the permissions granted to a user.
25. The method of any preceding clause, wherein the cache is local to the token server.
26. The method of any preceding clause, wherein the token is a refresh token.
27. A method comprising: storing, in a cache of a token server, data relating to a token issued to a client, comprising storing a first hybrid logical clock value associated with a user of the client; receiving, at the token server, a token from the client, wherein the token contains a second hybrid logical clock value associated with the user of the client; and if the second hybrid logical clock value is less than or equal to the first hybrid logical clock value: retrieving, from the cache, the data relating to the token and using the data retrieved from the cache to service a request from the client.
28. A token-based method of authorising user access to a resource and/or authenticating a user, wherein token keys are managed according to the method of any of clauses 1 to 27, and preferably wherein user access to the resource is authorised and/or a user is authenticated in dependence on a signed token being verified by a verifying entity.
29. An authentication system comprising:
   means (preferably in the form of one or more servers with one or more processing devices and associated memory) for storing, in a cache of a token server, data relating to a token issued to a client, comprising storing a first hybrid logical clock value associated with a user of the client; and
   receiving a token from the client, wherein the token contains a second hybrid logical clock value associated with the user of the client.
30. The authentication system of clause 29, wherein data is retrieved from different memory locations in dependence on the relationship between the second hybrid logical clock value and the first hybrid logical clock value.
31. The authentication system of clause 30, wherein, if the second hybrid logical clock value is less than or equal to the first hybrid logical clock value, the data relating to the token is retrieved from the cache and used to service a request from the client
32. The authentication system of clause 30 or 31 wherein the request from the client comprises a request to validate or refresh the token, wherein the means is further for: if the second hybrid logical clock value is less than or equal to the first hybrid logical clock value, validating or refreshing the token using the data retrieved from the cache.
33. The authentication system of clause 31 or 32, wherein if the second hybrid logical clock value is more than the first hybrid logical clock value: data relating to the token is retrieved from a database associated with the token server and used to service a request from the client.
34. The authentication system of clause 33, wherein if the request from the client comprises a request to validate or refresh the token, the means is further for: if the second hybrid logical clock value is more than the first hybrid logical clock value, validating or refreshing the token using the data retrieved from the database.
35. The authentication system of clause 33 or 34, wherein the means is further for storing, in the database associated with the token server, the data relating to the token issued to a client, comprising storing the first hybrid logical clock value associated with a user of the client.
36. The authentication system of any one of clauses 33 to 35, the means further for: storing, in the database associated with the token server, the data relating to the token issued to a client, comprising storing the first hybrid logical clock value associated with a user of the client.
37. The authentication system of any one of clauses 29 to 36, the means further for:
   issuing, from the token server, a resource access token to the client in exchange for an identity provider token provided by the client; and
   inserting in the resource access token the first hybrid logical clock value associated with a user of the client at the time of issuing the resource access token.
38. The authentication system of clause 37, wherein the first hybrid logical clock value is inserted in a payload of the token.
39. The authentication system of clause 37 or 38, wherein the first hybrid logical clock value is encoded in the token.
40. The authentication system of any one of clauses 29 to 39, wherein each hybrid logical clock value comprises a physical clock component representing a physical time property of an event relating to the user.
41. The authentication system of clause 40, wherein the physical time property is based on a network time protocol timestamp.
42. The authentication system of any one of clauses 29 to 41, wherein each hybrid logical clock value comprises a counter component representing a chronological property of an event relating to the user.
43. The authentication system of clause 42, wherein the chronological property is based on the sequence of the event in relation to other events.
44. The authentication system of clause 42 or 43, wherein the means is further for incrementing the counter upon each event.
45. The authentication system of any of clauses 42 to 44, wherein the means is further for incrementing the counter if the token server determines that the physical time property for a further token server is earlier than the physical time property for the token server.
46. The authentication system of any of clauses 42 to 45, wherein the means is further for resetting the counter to zero if the token server determines, preferably at an event relating to the user, that the physical time property for a further token server is earlier than the physical time property for the token server.
47. The authentication system of any one of clauses 40 to 46, wherein the means is further for notifying at least one further token server of an updated hybrid logical clock value for the user upon incrementing the counter.
48. The authentication system of any one of clauses 40 to 47, wherein the event is an issuance of a token by the token server.
49. The authentication system of any one of clauses 40 to 48, wherein the event is a login event, preferably comprising authentication of the user by an authentication server.
50. The authentication system of any one of clauses 40 to 49, wherein the event is a logout event.
51. The authentication system of any one of clauses 40 to 50, wherein the event is a change in the permissions granted to a user.
52. The authentication system of any one of clauses 29 to 51, wherein the cache is local to the token server.
53. The authentication system of any one of clauses 29 to 52, wherein the token is a refresh token.
54. An authentication system comprising:
   means (preferably in the form of one or more servers with one or more processing devices and associated memory) for storing, in a cache of a token server, data relating to a token issued to a client, comprising storing a first hybrid logical clock value associated with a user of the client;
   receiving, at the token server, a token from the client, wherein the token contains a second hybrid logical clock value associated with the user of the client; and
   if the second hybrid logical clock value is less than or equal to the first hybrid logical clock value: retrieving, from the cache, the data relating to the token and using the data retrieved from the cache to service a request from the client.
55. The system of any of clauses 29 to 54, further comprising: a token server; and a cache of the token server, the cache configured to store data relating to a token issued to a client, including a first hybrid logical clock value associated with a user of the client, wherein the token server is configured to receive a token from the client, the token containing a second hybrid logical clock value associated with the user of the client, and wherein, if the second hybrid logical clock value is less than or equal to the first hybrid logical clock value, the token server is configured to retrieve, from the cache, the data relating to the token and to use the data retrieved from the cache to service a request from the client.
56. A system for token-based authorisation of user access to a resource and/or authentication of a user, comprising the system of any of clauses 29 to 55, preferably wherein user access to the resource is authorised and/or a user is authenticated in dependence on a signed token being verified by a verifying entity.
57. A computer program product for carrying out a method comprising:
   storing, in a cache of a token server, data relating to a token issued to a client, comprising storing a first hybrid logical clock value associated with a user of the client; and
   receiving a token from the client, wherein the token contains a second hybrid logical clock value associated with the user of the client.
58. The computer program product of clause 57, wherein data is retrieved from different memory locations in dependence on the relationship between the second hybrid logical clock value and the first hybrid logical clock value.
59. The computer program product of clause 58 wherein, if the second hybrid logical clock value is less than or equal to the first hybrid logical clock value, the data relating to the token is retrieved from the cache and used to service a request from the client.
60. The computer program product of clause 58 or 59, wherein the request from the client comprises a request to validate or refresh the token, the method comprising: if the second hybrid logical clock value is less than or equal to the first hybrid logical clock value, validating or refreshing the token using the data retrieved from the cache.
61. The computer program product of clause 59 or 60, wherein: if the second hybrid logical clock value is more than the first hybrid logical clock value: data relating to the token is retrieved from a database associated with the token server and used to service a request from the client.
62. The computer program product of clause 60 or 61, wherein if the request from the client comprises a request to validate or refresh the token, the method comprises: if the second hybrid logical clock value is more than the first hybrid logical clock value, validating or refreshing the token using the data retrieved from the database.
63. The computer program product of clause 61 or 62, further comprising: replicating data relating to tokens issued by one more further token servers from one or more further databases associated with the one or more further token servers.
64. The computer program product of any one of clauses 61 to 63, further comprising: storing, in the database associated with the token server, the data relating to the token issued to a client, comprising storing the first hybrid logical clock value associated with a user of the client.
65. The computer program product of any of clauses 57 to 64, further comprising: issuing, from the token server, a resource access token to the client in exchange for an identity provider token provided by the client; and inserting in the resource access token the first hybrid logical clock value associated with a user of the client at the time of issuing the resource access token.
66. The computer program product of clause 65, wherein the first hybrid logical clock value is inserted in a payload of the token.
67. The computer program product of clause 65 or 66, wherein the first hybrid logical clock value is encoded in the token.
68. The computer program product of any of clauses 57 to 67, wherein each hybrid logical clock value comprises a physical clock component representing a physical time property of an event relating to the user.
69. The computer program product of clause 68, wherein the physical time property is based on a network time protocol timestamp.
70. The computer program product of any of clauses 57 to 69, wherein each hybrid logical clock value comprises a counter component representing a chronological property of an event relating to the user.
71. The computer program product of clause 70, wherein the chronological property is based on the sequence of the event in relation to other events.
72. The computer program product of clause 70 or 71, further comprising incrementing the counter upon each event.
73. The computer program product of any of clauses 70 to 72, further comprising incrementing the counter if the token server determines that the physical time property for a further token server is earlier than the physical time property for the token server.
74. The computer program product of any of clauses 70 to 73, further comprising resetting the counter to zero if the token server determines, preferably at an event relating to the user, that the physical time property for a further token server is earlier than the physical time property for the token server.
75. The computer program product of any one of clauses 73 or 74, wherein the further token server is located in a geographical region that is different to the geographical region in which the token server is located.
76. The computer program product of any one of clauses 70 to 75, further comprising the token server notifying at least one further token server of an updated hybrid logical clock value for the user upon incrementing the counter.
77. The computer program product of any one of clauses 68 to 76, wherein the event is an issuance of a token by the token server.
78. The computer program product of any one of clauses 68 to 77, wherein the event is a login event, preferably comprising authentication of the user by an authentication server.
79. The computer program product of any one of clauses 68 to 78, wherein the event is a logout event.
80. The computer program product of any one of clauses 68 to 79, wherein the event is a change in the permissions granted to a user.
81. The computer program product of any of clauses 57 to 80, wherein the cache is local to the token server.
82. The computer program product of any of clauses 57 to 81, wherein the token is a refresh token.
83. A computer program product for carrying out a method comprising: storing, in a cache of a token server, data relating to a token issued to a client, comprising storing a first hybrid logical clock value associated with a user of the client; receiving, at the token server, a token from the client, wherein the token contains a second hybrid logical clock value associated with the user of the client; and if the second hybrid logical clock value is less than or equal to the first hybrid logical clock value: retrieving, from the cache, the data relating to the token and using the data retrieved from the cache to service a request from the client.
84. A computer program product for carrying out a token-based method of authorising user access to a resource and/or authenticating a user, wherein token keys are managed according to the method of any of clauses 1 to 27, and preferably wherein user access to the resource is authorised and/or a user is authenticated in dependence on a signed token being verified by a verifying entity.

### Alternatives and modifications

It will be understood that the invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A method of synchronising an authorisation system, the method comprising:
receiving an indication of a time at a time authority;
comparing the indication of a time to a clock corresponding to a server;
determining an error in the clock corresponding to the server based on the indication of a time; and
adjusting the clock based on the determined error.

2. The method of claim 1, wherein the indication of a time is received in a refresh token response.

3. The method of any claim 1 or 2, further comprising: receiving an access token with a corresponding expiry time and determining when the access token expires based on the adjusted clock and the corresponding expiry time.

4. The method of claim 2 or 3, the method further comprising:
receiving a second refresh token response comprising an indication of a second time;
comparing the second indication of a time to the clock corresponding to the server; and
determining a second error in the clock corresponding to the server based on the second indication of a time.

5. The method of claim 4, further comprising:
comparing the second error to a threshold; and
in response to the second error exceeding the threshold, adjusting the clock based on the second error.

6. The method of claim 2 or 3, the method further comprising:
receiving a second refresh token response; and
determining an elapsed time between the refresh token response and the second refresh token response.

7. The method of claim 6, further comprising:
comparing the elapsed time to a second threshold;
in response to the amount of elapsed time exceeding the second threshold:
comparing the second indication of a time to the clock corresponding to the server;
determining a second error in the clock corresponding to the server based on the second indication of a time;
adjusting the clock based on the second error.

8. The method of any preceding claim, wherein the time corresponds to an epoch time of a token server.

9. The method of claim 8, wherein a travel time from the token server is discounted.

10. A token-based method of authorising user access to a resource and/or authenticating a user, wherein token keys are managed according to the method of any of claims 1 to 9, and preferably wherein user access to the resource is authorised and/or a user is authenticated in dependence on a signed token being verified by a verifying entity.

11. A synchronised authorisation system comprising:
means for, preferably one or more servers with one or more processing devices and associated memory for: receiving an indication of a time at a time authority;
comparing the indication of a time to a clock corresponding to a server;
determining an error in the clock corresponding to the server based on the indication of a time; and
adjusting the clock based on the determined error.

12. The system of claim 11, wherein the indication of a time is received in the refresh token response.

13. The system of claim 11 or 12, wherein the means is further for: receiving an access token with an expiry time and determining when the access token expires based on the adjusted clock and the expiry time.

14. A system for token-based authorisation of user access to a resource and/or authentication of a user, comprising the system of any of claims 11 to 13, preferably wherein user access to the resource is authorised and/or a user is authenticated in dependence on a signed token being verified by a verifying entity.

15. A computer program product for carrying out the method of any of Claims 1 to 10.

## Amended claims

### Amended claims in accordance with Rule 137(2) EPC.

1. A method of synchronising an authorisation system, the method comprising:
receiving (1406) an indication of a time at a time authority, wherein the indication of time comprises a time field contained in a token;
comparing (1408) the indication of a time to a clock corresponding to a server;
determining an error in the clock corresponding to the server based on the indication of a time; and
adjusting the clock based on the determined error

2. The method of claim 1, wherein the indication of a time comprises a time field contained in a refresh token.

3. The method of any claim 1 or 2, further comprising: receiving an access token with a corresponding expiry time and determining when the access token expires based on the adjusted clock and the corresponding expiry time.

4. The method of claim 2 or 3, the method further comprising:
receiving a second refresh token response comprising an indication of a second time;
comparing the second indication of a time to the clock corresponding to the server; and
determining a second error in the clock corresponding to the server based on the second indication of a time.

5. The method of claim 4, further comprising:
comparing the second error to a threshold; and
in response to the second error exceeding the threshold, adjusting the clock based on the second error.

6. The method of claim 2 or 3, the method further comprising:
receiving a second refresh token response; and
determining an elapsed time between the refresh token response and the second refresh token response.

7. The method of claim 6, further comprising:
comparing the elapsed time to a second threshold;
in response to the amount of elapsed time exceeding the second threshold:
comparing the second indication of a time to the clock corresponding to the server;
determining a second error in the clock corresponding to the server based on the second indication of a time;
adjusting the clock based on the second error.

8. The method of any preceding claim, wherein the time corresponds to an epoch time of a token server.

9. The method of claim 8, wherein a travel time from the token server is discounted.

10. A token-based method of authorising user access to a resource and/or authenticating a user comprising the method of any of claims 1 to 9, and preferably wherein user access to the resource is authorised and/or a user is authenticated in dependence on a signed token being verified by a verifying entity.

11. A synchronised authorisation system (100) comprising:
means for, preferably one or more servers with one or more processing devices and associated memory for:
receiving (1406) an indication of a time at a time authority, wherein the indication of time comprises a time field contained in a token;
comparing (1408) the indication of a time to a clock corresponding to a server;
determining an error in the clock corresponding to the server based on the indication of a time; and
adjusting the clock based on the determined error.

12. The system (100) of claim 11, wherein the indication of a time comprises a time field contained in a refresh token.

13. The system (100) of claim 11 or 12, wherein the means is further for: receiving an access token with an expiry time and determining when the access token expires based on: the clock adjusted based on the determined error; and the expiry time.

14. A system (100) for token-based authorisation of user access to a resource and/or authentication of a user, comprising the system of any of claims 11 to 13, preferably wherein user access to the resource is authorised and/or a user is authenticated in dependence on a signed token being verified by a verifying entity.

15. A computer program product comprising instructions which, when executed by one or more processors, cause the one or more processors to carry out the method of any of claims 1 to 10.
